(19) Europäisches Patentamt
European Patent Office
Office européen des brevets

(11) **EP 4 746 569 A1**

(12) **EUROPEAN PATENT APPLICATION**
published in accordance with Art. 153(4) EPC

(43) Date of publication:
**20.05.2026 Bulletin 2026/21**

(21) Application number: **24838781.3**

(22) Date of filing: **08.07.2024**

(51) International Patent Classification (IPC):
**H04W 74/08** (2024.01)

(52) Cooperative Patent Classification (CPC):
**H04W 74/08; H04W 74/0833; H04W 80/06**

(86) International application number:
**PCT/CN2024/104274**

(87) International publication number:
**WO 2025/011528 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.07.2023 CN 202310864694**

(71) Applicant: **Beijing Unisoc Communications Technology Co., Ltd**
**Beijing 100083 (CN)**

(72) Inventor: **ZHOU, Huan**
**Beijing 100083 (CN)**

(74) Representative: **Petraz, Gilberto Luigi et al**
**GLP S.r.l.**
**Viale Europa Unita, 171**
**33100 Udine (IT)**

(54) **PHYSICAL RANDOM ACCESS CHANNEL TRANSMISSION METHOD AND APPARATUS, TERMINAL DEVICE, AND NETWORK DEVICE**

(57) The present application discloses a physical random access channel transmission method and device, terminal device and network device, and relates to the field of communication technology. The method includes: performing PRACH transmission on a first valid RO obtained according to SBFD configuration. As PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

> performing physical random access channel (PRACH) transmission on a first valid physical random access channel occasion (RO) obtained according to sub-band full duplex (SBFD) configuration — S1101

FIG. 11

## Description

The present invention is filed based on and claims the priority of Chinese Application No. 202310864694.2 filed on July 13, 2023, entitled "physical random access channel transmission method and device, terminal device and network device", the disclosure of which are incorporated in their entireties by reference herein.

## TECHNICAL FIELD

The present application relates to the field of communication technology, and in particular to a physical random access channel transmission method and device, terminal device and network device.

## BACKGROUND

The standard protocol specified by the 3rd generation partnership project (3GPP) introduces relevant research on the random access process. In the relevant research, a terminal device uses a physical random access channel occasion (PRACH occasion, referred to as RO) to transmit a random access preamble (RA preamble)/random access request message. The RA preamble/random access request message can be used to request access to the network, so that a network device can estimate a transmission delay with the terminal device based on the RA preamble/random access request message, and calibrate uplink timing accordingly, thereby performing relevant PRACH transmission.

Currently, the PRACH transmission is mainly for frequency division duplexing (FDD) system and time division duplexing (TDD) system. Compared with the FDD system which uses symmetrical spectrum to separate uplink and downlink, the TDD system allocates different slots for uplink or downlink transmissions and use asymmetric spectrum, thereby achieving flexible configuration of slots. However, the TDD system also has a limitation on an uplink and downlink slot ratio, which results in a large transmission delay in the TDD system.

In view of this, in order to avoid the limitation on the uplink and downlink slot ratio as much as possible, 3GPP is discussing subband full duplex (SBFD), which divides non-overlapping uplink and downlink subbands in the frequency domain of the same TDD carrier, thereby supporting uplink and downlink transmission at the same time, improving spectrum utilization efficiency and flexibility. However, further research is still needed on how to integrate SBFD with PRACH transmission to achieve enhanced PRACH transmission.

## SUMMARY

The present application provides a physical random access channel transmission method and device, a terminal device, and a network device, aiming to integrate SBFD with PRACH transmission to achieve enhanced PRACH transmission.

In a first aspect, a physical random access channel transmission method according to the present application includes:

performing physical random access channel (PRACH) transmission on a first valid physical random access channel occasion (RO) obtained according to sub-band full duplex (SBFD) configuration.

It can be seen that as PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

In a second aspect, a physical random access channel transmission device according to the present application includes:

a transmission unit used to perform physical random access channel (PRACH) transmission on a first valid physical random access channel occasion (RO) obtained according to sub-band full duplex (SBFD) configuration.

In a third aspect, the steps in the above method described in the first aspect are applied to or in a terminal device.

In a fourth aspect, the steps in the above method described in the first aspect are applied to or in a network device.

In a fifth aspect, a terminal device according to the present application includes a processor, a memory, and a computer program or instructions stored in the memory; where the processor executes the computer program or instructions to implement the steps in the above method described in the first aspect.

In a sixth aspect, a network device according to the present application includes a processor, a memory, and a computer program or instructions stored in the memory; where the processor executes the computer program or instructions to implement the steps in the above method described in the first aspect.

In a seventh aspect, a chip according to the present application includes a processor and a communication interface; where the processor executes the steps in the above method described in the first aspect.

In an eighth aspect, a chip module according to the present application includes a transceiver component and a chip; where the chip includes a processor, and the processor executes the steps in the above method described in the first aspect.

In a ninth aspect, a computer-readable storage medium according to the present application stores a computer program or instructions; where the computer program or instructions, when executed, implement the steps in the above method described in the first aspect. For example, the computer program or instructions are executed by a processor.

In a tenth aspect, a computer program product according to the present application includes a computer program or instructions; where the computer program or instructions, when executed, implement the steps in the above method described in the first aspect. For example, the computer program or instructions are executed by a processor.

The beneficial effects brought by the technical solutions of the second to tenth aspects can be referred to the technical effects of the first aspect, and details are not repeated here.

## BRIEF DESCRIPTION OF THE DRAWINGS

To better clarify technical solutions of embodiments of the present disclosure, drawings used in descriptions of the embodiments are briefly introduced hereinafter.

FIG. 1 is a schematic diagram showing architecture of a communication system according to an embodiment of the present application;

FIG. 2 is a schematic diagram of mapping relationship between SSB and RO according to an embodiment of the present application;

FIG. 3 is a schematic diagram of another mapping relationship between SSB and RO according to an embodiment of the present application;

FIG. 4 is a schematic diagram of still another mapping relationship between SSB and RO according to an embodiment of the present application;

FIG. 5 is a schematic diagram of flexible duplex according to an embodiment of the present application;

FIG. 6 is a schematic diagram of full duplex according to an embodiment of the present application;

FIG. 7 is a schematic diagram showing a time-frequency domain position of a valid RO according to an embodiment of the present application;

FIG. 8 is a schematic diagram showing a time-frequency domain position of another valid RO according to an embodiment of the present application;

FIG. 9 is a schematic diagram showing a time-frequency domain position of still another valid RO according to an embodiment of the present application;

FIG. 10 is a schematic diagram showing a time-frequency domain position of yet another valid RO according to an embodiment of the present application;

FIG. 11 is a schematic flowchart of a physical random access channel transmission method according to an embodiment of the present application;

FIG. 12 is a block diagram showing functional units of a physical random access channel transmission device according to an embodiment of the present application;

FIG. 13 is a schematic diagram of a terminal device according to an embodiment of the present application; and

FIG. 14 is a schematic diagram of a network device according to an embodiment of the present application.

## DETAILED DESCRIPTION

It is to be understood that the terms "first", "second", etc. in the specification of the present application are used to distinguish similar objects and are not necessarily used to describe a specific order. In addition, the terms such as "including" and "having" and any variations thereof are intended to cover non-exclusive inclusion. For example, a process, method, software, product or device including a series of steps or units is not limited to the steps or units that are clearly listed and may include other steps or units that are not clearly listed or are inherent to the process, method, product, or device.

The "embodiment" involved in the embodiments of the present application means that specific features, structures or characteristics described in conjunction with an embodiment may be included in at least one embodiment of the present application. The appearance of this phrase in various places in the specification does not necessarily refer to the same embodiment, nor is it an independent or alternative embodiment that is mutually exclusive with other embodiments. It is explicitly and implicitly understood by those skilled in the art that the embodiment described herein can be combined with other embodiments.

The term "and/or" in the embodiments of the present application describes an association relationship of associated objects, which indicates that there may be three types of relationships. For example, A and/or B may represent three situations: only A being included, both A and B being included, only B being included. A and B can be singular or plural.

The character "/" in the embodiments of the present application generally indicates that there is an "or" relationship between associated objects in front of it and behind it. In addition, the character "/" can also indicate a division sign, that is, performing a division operation. For example, A/B can indicate A divided by B.

In the embodiments of the present application, "at least one (item)" or similar expressions refer to any combination of these items, including any combination of single items or plural items, and refer to one or multiple, where the multiple refers to two or more. For example, at least one (item) of a, b, or c can represent the following seven situations: a, b, c, a and b, a and c, b and c, a, b, and c. Each of a, b, and c can be an element or a set including one or more elements.

In the embodiments of the present application, "equal to" can be used in conjunction with "greater than", and is applicable to the technical solution adopted for the "greater than" scenario, or can also be used in conjunction with "less than", and is applicable to the technical solution adopted for the "less than" scenario. When "equal to" is used in conjunction with "greater than", it is not used in conjunction with "less than"; when "equal to" is used in conjunction with "less than", it is not used in conjunction with "greater than".

In the embodiments of the present application, the terms "of", "corresponding/relevant", "corresponding", and "indicated" may sometimes be used interchangeably.

In the embodiments of the present application, the terms "associated with", "corresponding to", "correspond to", "is", "of", "for", "belonging to", "as" and "regarded as" can sometimes be used interchangeably.

The "connection" in the embodiments of the present application refers to various connection methods such as direct connection or indirect connection to achieve communication between devices, which is not limited thereto.

The "network" in the embodiments of the present application can be expressed as the same concept as the "system", i.e., a communication system is a communication network.

The relevant contents, concepts, meanings, technical problems, technical solutions and beneficial effects involved in the embodiments of the present application are described hereinafter.

First, communication system, terminal device and network device.

1. Communication system

The technical solution of the embodiment of the present application may be applied to various systems. For example, applicable systems may be general packet radio service (GPRS) system, long term evolution (LTE) system, advanced long term evolution (LTE-A) system, new radio (NR) system, evolution system of the NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (Wi-Fi), 6th generation (6G) communication system or other communication systems.

It is to be noted that the number of connections supported by traditional communication systems is limited and easy to implement. However, with the development of communication technology, the communication system can not only support traditional communication, but also support device-to-device (D2D) communication, machine-to-machine (M2M) communication, machine type communication (MTC), vehicle-to-vehicle (V2V) communication, vehicle-to-everything (V2X) communication, narrowband internet of things (NB-IoT) communication, etc. Therefore, the technical solutions of the embodiments of the present application can also be applied to the above communication systems.

In addition, the technical solutions of the embodiments of the present application can be applied to beamforming, carrier aggregation (CA), dual connectivity (DC) or standalone (SA) deployment scenarios, etc.

In the embodiment of the present application, the spectrum used for communication between the terminal device and the network device can be a licensed frequency band or an unlicensed frequency band, which is not limited herein. In addition, the unlicensed frequency band can be understood as a shared frequency band, and the licensed spectrum can be understood as a non-shared frequency band.

Since the embodiments of the present application describe various embodiments in conjunction with the terminal device and the network device, the involved terminal device and network device are described in detail hereinafter.

2. Terminal device

The terminal device can be a device with transmission and reception capabilities, and may also be referred to as a terminal, user equipment (UE), remote UE, relay UE, access terminal device, user unit, user station, mobile station, mobile platform, remote station, mobile device, user terminal device, intelligent terminal device, wireless communication device, user agent or user device. It is be noted that relay UE is a terminal device capable of providing relay forwarding services for other terminal devices (including remote UEs).

For example, the terminal device may be a mobile phone, a pad, a computer with wireless transceiver function, a virtual reality (VR) terminal device, an augmented reality (AR) terminal device, a wireless terminal device in industrial control, a wireless terminal device in unmanned autonomous driving, a wireless terminal device in remote medical, a wireless terminal device in a smart grid, a wireless terminal device in transportation safety, a wireless terminal device in a smart city, or a wireless terminal device in a smart home, etc.

For another example, the terminal device may also be a cellular phone, a cordless phone, a session initiation protocol (SIP) phone, a wireless local loop (WLL) station, a personal digital assistant (PDA), a handheld device with wireless communication function, a computing device or other processing device connected to a wireless modem, a vehicle-mounted device, a wearable device, a terminal device in a next-generation communication system (such as an NR communication system, a 6G communication system), or a terminal device in a future evolved public land mobile communication network (PLMN), etc., which is not limited herein.

In some possible implementations, the terminal device can be deployed on land, including indoors or outdoors, handheld, wearable or vehicle-mounted; or can be deployed on the water surface (such as ships, etc.); or can be deployed in the air (such as airplanes, balloons and satellites, etc.).

In some possible implementations, the terminal device may include a device with wireless communication functions, such as a chip system, a chip, or a chip module. For example, the chip system may include a chip and may also include other discrete devices.

In some possible implementations, the terminal device in the embodiments of the present application may be a chip, a chip module, a device, a unit, etc., which is not limited herein.

3. Network device

The network device may be a device with transmission and reception capabilities, and may be used to communicate with the terminal device.

In some possible implementations, the network device may be responsible for radio resource management (RRM), quality of service (QoS) management, data compression and encryption, data transmission and reception, etc. on the air interface side.

In some possible implementations, the network device may include a base station (BS) in a communication system or a device deployed in a radio access network (RAN) for providing wireless communication functions, that is, the network device may include a device in the RAN.

For example, the device in the RAN may include an evolutional node B (eNB or eNodeB) in the LTE communication system, a next generation evolved node B (ng-eNB) in the NR communication system, a next generation node B (gNB) in the NR communication system, a master node (MN) in a dual connectivity architecture, a second node or secondary node (SN) in the dual connectivity architecture, etc., which is not limited herein.

In some possible implementations, the network device may include a device in a core network (CN).

For example, the device in the CN may include an access and mobility management function (AMF), a user plane function (UPF), a session management function (SMF), etc.

In some possible implementations, the network device may also be an access point (AP) in a WLAN, a relay station, a communication device in a future evolved PLMN network, a communication device in an NTN network, etc.

In some possible implementations, the network device may include a device that provides wireless communication functions for the terminal device, such as a chip system, a chip, or a chip module. For example, the chip system may include a chip, or may include other discrete devices.

In some possible implementations, the network device may be a transmission and reception point (TRP).

In some possible implementations, the network device may communicate with an internet protocol (IP) network, such as the internet, a private IP network, or other data networks.

In some possible implementations, the network device may include an independent node to implement the functions of the above base station, or may include two or more independent nodes to implement the functions of the above base station. For example, the network device includes a centralized unit (CU) and a distributed unit (DU), such as gNB-CU and gNB-DU. Further, in some other embodiments of the present application, the network device may further include an active antenna unit (AAU). The CU implements a part of functions of the network device, and the DU implements another part of the functions of the network device. For example, the CU is responsible for processing non-real-time protocols and services, and implements functions of a radio resource control (RRC) layer, a service data adaptation protocol (SDAP) layer, and a packet data convergence protocol (PDCP) layer. The DU is responsible for processing physical layer protocols and real-time services, and implements functions of a radio link control (RLC) layer, a medium access control (MAC) layer, and a physical (PHY) layer. In addition, the AAU can implement some physical layer processing functions, radio frequency processing, and related functions of active antennas. Since information of the RRC layer will eventually become information of the PHY layer, or be converted from the information of the PHY layer, under this network deployment, high-level signaling (such as RRC signaling) can be considered to be generated by the CU and transmitted by the DU, or transmitted by the DU and the AAU. It is to be understood that the network device may include at least one of the CU, DU or AAU. In addition, the CU can be divided into a RAN device, or the CU can be divided into a core network device, which is not limited herein.

In some possible implementations, the network device may be any site in a plurality of sites that perform coherent joint transmission (CJT) with the terminal device, or other sites outside the plurality of sites, or other network device that performs network communication with the terminal device, which is not limited herein. The multi-site coherent joint transmission may refer to coherent transmission jointly performed by multiple sites, or transmission of different data belonging to the same physical downlink shared channel (PDSCH) from different sites to the terminal device, or virtualization of multiple sites as a single site for transmission. Names specifying the same meaning in other standards are also applicable to the present application, i.e., the present application does not restrict the names of these parameters. The sites in multi-site coherent joint transmission may include remote radio heads (RRH), TRPs, etc., which is not limited herein.

In some possible implementations, the network device may be any site in the multiple sites that perform incoherent joint transmission with the terminal device, or other site outside the multiple sites, or other network device that performs network communication with the terminal device, which is not limited herein. The multi-site incoherent joint transmission may refer to incoherent transmission jointly performed by multiple sites, or transmission of different data belonging to the same physical downlink shared channel (PDSCH) from different sites to the terminal device. Names specifying the same meaning in other standards are also applicable to the present application, i.e., the present application does not restrict the names of these parameters. The sites in the multi-site incoherent joint transmission can be RRH, TRP, etc., which is not limited herein. The transmission scheme of multiple TRPs may include S-DCI based M-TRP transmission scheme, or may include M-DCI based M-TRP transmission scheme.

It is to be noted that the TRP of the present application is not limited to coherent joint transmission or incoherent joint transmission scenarios, but can also be applied to other scenarios, which is not limited herein.

In some possible implementations, the network device may possess mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station set up in a location such as land or water.

In some possible implementations, the network device can provide services for a cell, and a terminal device in the cell can communicate with the network device through transmission resources (such as spectrum resources). The cell may be a macro cell, a small cell, a metro cell, a micro cell, a pico cell, a femto cell, etc.

In some possible implementations, the network device in the embodiments of the present application may be a chip, a chip module, a device, a unit, etc., which is not limited herein.

4. Example

The following provides an exemplary description of a communication system in the embodiment of the present application.

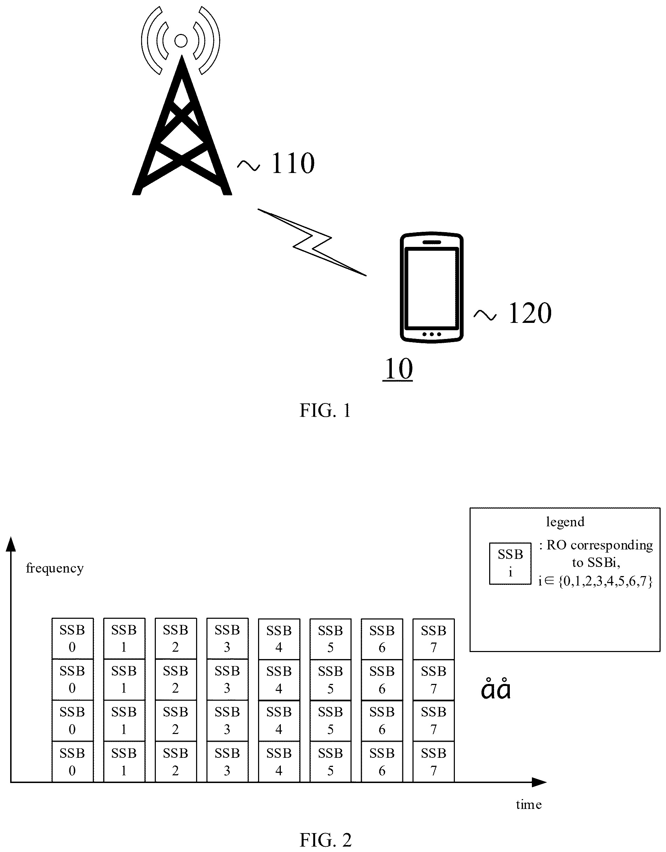

For example, a network architecture of a communication system in an embodiment of the present application can be referred to in FIG. 1. As shown in FIG. 1, the communication system 10 can include a network device 110 and a terminal device 120. The terminal device 120 can communicate with the network device 110 in a wireless manner.

FIG. 1 is merely an example of a network architecture of the communication system and does not constitute a limitation on the network architecture of the communication system in the embodiment of the present application.

For example, the communication system 10 may further include a server or other devices.

For another example, the communication system 10 may include other network device in addition to the network device 110.

For another example, the communication system 10 may include other terminal device in addition to the terminal device 120.

Second, random access procedure.

1. 4-step random access procedure and 2-step random access procedure

For the 4-step random access, an entire procedure includes 4 steps: transmission of a random access request message, transmission of a random access response (RAR) message (also called message 2 (Msg2)), transmission of message 3 (Msg3) and transmission of message 4 (Msg4).

The random access request message may include a random access preamble (RA preamble). The main function of the RA preamble may be to request access to the network device, so that the network device can estimate transmission delay between the network device and the terminal device based on the RA preamble and calibrate uplink timing, and indicate it to the terminal device through an RAR message.

Compared with the 4-step random access procedure, the 2-step random access procedure helps to reduce access delay of the terminal device. The 2-step random access procedure mainly includes the following two steps: transmission of message A (MsgA) and message B (MsgB).

MsgA may include RA preamble and physical uplink shared channel (PUSCH) payload. MsgB may include Msg2 and Msg4. Msg2 here refers to Msg2 in the above 4-step random access procedure, and Msg4 refers to Msg4 in the above 4-step random access procedure.

2. RA preamble

[Components of RA preamble]

The RA preamble may include a cyclic prefix (CP) and a sequence.

The RA preamble can support 4 long sequences with a length of 839 and 9 short sequences with a length of 139, and a length of an RA preamble sequence can be indicated by a high-level parameter prach-RootSequenceIndex.

Each cell has 64 available RA preambles, forming an RA preamble sequence, and each RA preamble has a unique index (RA preamble index) in the RA preamble sequence. The terminal device selects one (or the network device specifies one) RA preamble from the RA preamble sequence for transmission on a physical random access channel occasion (PRACH occasion, RO), that is, the RA preamble is carried (or transmitted) on the PRACH occasion.

[PRACH time-frequency resources]

In the random access procedure, transmission of a PRACH message requires time-frequency resources, and PRACH time-frequency resources are divided to obtain at least one physical random access channel occasion (PRACH occasion, RO). The RO is used to transmit or carry a random access request message. The RO may include a time resource and a frequency resource. Specifically, the time resource can be indicated by a time resource index, and the frequency resource can be indicated by a frequency resource index.

Table 1

| PRACH Configuration Index $N_t^{RA,slot}$ $N_{dur}^{RA}$ | Preamble format | $n_f$ mod x=y | | Subframe number | Starting symbol | Number of PRACH slots within a subframe | , number of time-domain ROs within a PRACH slot | , PRACH duration (duration of RO) |
|---|---|---|---|---|---|---|---|---|
| | | x | y | | | | | |
| 0 | 0 | 16 | 1 | 1 | 0 | - | - | 0 |
| ... | ... | ... | ... | ... | ... | ... | ... | ... |
| 109 | A1/B1 | 2 | 0 | 4 | 0 | 2 | 7 | 2 |
| ... | ... | ... | ... | ... | ... | ... | ... | ... |

The time domain position or time resource of RO, that is, the PRACH time resource used to transmit/carry RA premble/Msg1, can be configured to the terminal device by the network device through the parameter prach-ConfigurationIndex in the high-level parameter RACH-ConfigGeneric. For example, the specific configuration manner can be seen in Table 1.

Table 1 defines random access configuration for FR1 and paired spectrum/supplemental uplink, where $n_f$ represents a system frame number, x represents a PRACH configuration period, $N_t^{RA,slot}$ represents the number of ROs within a PRACH slot, and $N_{dur}^{RA}$ represents a time domain symbol duration of a RO.

For example, when the PRACH configuration index is 109, the following exists:

the random access preamble format uses A1/B1;
every two system frames (i.e., the system frame index is an even number 0, 2, 4, ...) include RO (i.e., $n_f$ mod 2 = 0);
a starting position of a time resource of RO is in a 4-th subframe of the system frame, starting from 0-th OFDM symbol;
there are 2 PRACH slots in the 4-th subframe, and each PRACH slot has 7 ( $N_t^{RA,slot} = 7$ ) time domain ROs;

duration of the RO is 2 ( $N_{\text{dur}}^{\text{RA}} = 2$ ), which occupies 2 OFDM symbols.

It is to be noted that, in one embodiment of the present application, time resources identified by indexes of two adjacent time resources may be consecutive or non-consecutive. For example, in case that indexes of time resources are index 0 and index 1, a time resource identified by the index 0 includes 0-th to 1-st OFDM symbols in 4-th subframe in the system frame, and a time resource identified by the index 1 includes 2nd to 3rd OFDM symbols in the 4-th subframe in the system frame.

The parameter msg1-FrequencyStart in the high-level parameter RACH-ConfigGeneric can be used to configure an offset from a starting frequency domain position of the RO to a starting frequency domain position of an initial BWP or a current active BWP.

The parameter msg1-FDM in the high-level parameter RACH-ConfigGeneric may be used to configure the number of frequency resource indexes of the RO, or the number of frequency domain ROs at the same time domain position.

For example, the parameter msg1-FDM=4 may indicate that there are 4 frequency domain ROs at the same time domain position.

[Mapping between synchronization signal and PBCH block (SSB) and beams]

In 5G NR communication system, as the cell frequency increases, the coverage range correspondingly decreases. To extend the coverage range of the cell, certain broadcast information can no longer be transmitted in the form of coverage, but in the form of beam sweeping.

The beam sweeping is to concentrate energy in a certain direction at a certain moment, so that a signal can be transmitted farther in this direction, but the signal cannot be received in other directions; then, the signal can be transmitted in another direction at the next moment; finally, by constantly changing the beam direction, the entire cell can be covered.

In the random access procedure of 5G NR, beams are used, and SSB has multiple transmission occasion in a time domain period and has a corresponding index, namely an SSB index.

Each beam may correspond to (map/associated with) at least one SSB index, and the beams corresponding to different SSB indexes may be the same (in the same direction) or different (in different directions).

The SSB is in units of half-frame 5ms, which is an SS burst set. All SSBs in an SS burst set must be transmitted periodically in the same half-frame. The SSB appears several times in a half-frame at intervals. Each of these SSBs corresponds to a beam sweeping direction, and eventually there is an SSB in each direction.

For the terminal device, when the SSB beam sweeping signal covers the terminal device, the terminal device has an occasion to transmit RA preamble, that is, the beam corresponds (associated/mapped) RA preamble. At this point, if the network device receives an RA preamble of the terminal device, the network device can know the best beam in downlink or the best downlink beam. In other words, the network device knows which beam points to the terminal device.

Since the beam corresponds to the RA preamble, and the beam corresponds to the SSB, the SSB needs to be mapped with the RA preamble. In addition, since the RA preamble needs to be transmitted based on the RO, that is, the RA preamble needs to be carried/transmitted on the RO, the SSB needs to be mapped with the RO so that the network device knows on which beam to transmit Msg2 to the terminal device.

[SSB mapping with RO and SSB mapping with RA preamble]

The network device can configure N (where N is configured by L1 parameter SSB-per-rach-occasion) SSBs associated (mapped/corresponded) with one RO (N≥1) for the terminal device through the high-level parameter ssb-perRACH-OccasionAndCB-PreamblesPerSSB; or the network device can configure an SSB associated (mapped/corresponded) with 1/N (where N is configured by the L1 parameter SSB-per-rach-occasion) ROs (N<1) for the terminal device through the high-level parameter ssb-perRACH-OccasionAndCB-PreamblesPerSSB, and each SSB is associated (mapped/corresponded) with R (where R is configured by the L1 parameter CB-preambles-per-SSB) RA preamble indexes.

For example, a value of N may be {1/8, 1/4, 1/2, 1, 2, 4, 8, 16}.

There are two configurations for N.

One is that N<1, in which case one SSB can be associated with 1/N valid ROs, where a preamble associated with the SSB starts from RA preamble index 0.

For example, if N=1/8, one SSB is associated with 8 ROs, and the starting point of the 8 ROs is preamble index 0.

The other is that N≥1, in which case N SSBs are associated with one RO. For example, SSB n can be used to select one from R preambles to transmit Msg1, 0≤n≤N-1, where n refers to an SSB index, and the preamble associated with SSB n starts from RA preamble index $N_{preamble}^{total} / N$ . $N_{preamble}^{total}$ preamble is configured by the high-level parameter totalNumberOfRA-Preambles and is an integer multiple of N.

For example, by taking N=2, $N_{preamble}^{total}=64$ as an example, in this case, two SSBs are associated with one RO, the RA preamble index associated with SSB0 starts from 0, and the RA preamble index associated with SSB1 starts from 32. That is, SSB0 is associated with RA preambles with indexes of 0 to 31, and SSB1 is associated with RA preambles with indexes of 32 to (the total number of corresponding RA preambles-1).

It is to be noted that for frequency division duplexing (FDD) mode or paired spectrum, all ROs are valid.

For time division duplexing (TDD) mode or unpaired spectrum, if the network side does not configure high-level parameter (such as tdd-UL-DL-ConfigurationCommon), for a RO in a PRACH slot, when the RO is after an SSB in the PRACH slot and starts at least $N_{gap}$ symbols after the last SSB symbol, the RO is valid, that is, a valid RO. The relationship between $N_{gap}$ and the RA preamble subcarrier spacing is shown in Table 2.

For TDD mode or unpaired spectrum, if the network side configures high-level parameter (such as tdd-UL-DL-ConfigurationCommon), for a RO in a PRACH slot, when the RO is in an uplink symbol, the RO is valid, that is, a valid RO; or, when the RO is after an SSB in the PRACH slot, and starts at least than $N_{gap}$ symbols after the last downlink symbol and starts at least $N_{gap}$ symbols after the last SSB symbol, the RO is valid, that is, a valid RO.

Table 2

| RA preamble subcarrier spacing | $N_{gap}$ |
|---|---|
| 1.25kHz or 5kHz | 0 |
| 15kHz or 30kHz or 60kHz or 120kHz | 2 |

In the Table 2, for an RA preamble sequence with a subcarrier spacing (SCS) of 1.25kHz/5kHz, a value of $N_{gap}$ is 0; for an RA preamble sequence with a subcarrier spacing (SCS) of 15kHz/30kHz/60kHz/120kHz, the value of $N_{gap}$ is 2.

In summary, the mapping relationship between SSB and RO can be carried out in the following order:

first, RA preamble indexes in a RO are arranged in ascending order;
second, frequency resource indexes for frequency-division multiplexed ROs are arranged in ascending order.
third, time resource indexes for time-division multiplexed ROs in a PRACH slot are arranged in ascending order;
finally, PRACH slot indexes are arranged in ascending order.

The above "mapping relationship between the SSB and the RO" is illustrated hereinafter with examples.

[Example 1]

For example, 8 SSBs with indexes 0 to 7 are configured for a cell, and the parameter msg1-FDM=4, and the parameter ssb-perRACH-Occasion=1/4. In this case, the mapping relationship between SSB and RO is shown in FIG. 2.

In FIG. 2, the parameter msg1-FDM=4 indicates that on one time resource of the RO, the frequency resource indexes of the RO are index 0, index 1, index 2, and index 3.

The parameter ssb-perRACH-Occasion=1/4 (i.e., N=1/4) means that one SSB is mapped to 4 ROs.

Therefore, following the ascending order of frequency resource indexes, SSB 0 is sequentially mapped to 4 ROs, that is, to the ROs whose time resource index is index 0 and whose frequency resource indexes are index 0, index 1, index 2, and index 3.

Since the number of SSBs is 8, the SSBs have not been mapped yet. Therefore, according to the above "mapping principle", following the ascending order of frequency resource indexes, SSB 1 is sequentially mapped to 4 ROs, that is, to the ROs whose time resource index is index 1 and whose frequency resource indexes are index 0, index 1, index 2, and index 3, and so on.

[Example 2]

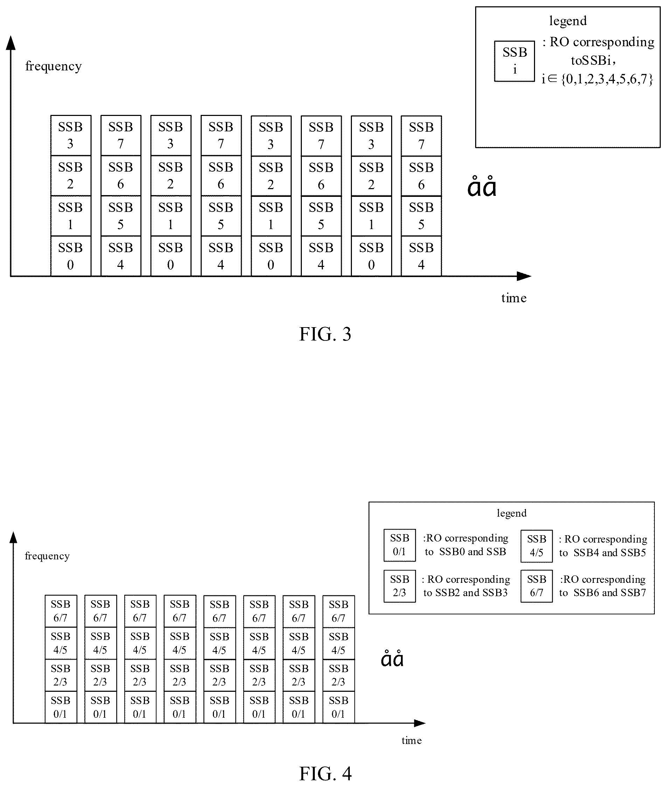

For example, 8 SSBs with indexes 0 to 7 are configured for a cell, and the parameter msg1-FDM=4, and the parameter ssb-perRACH-Occasion=1. In this case, the mapping relationship between SSB and RO is shown in FIG. 3.

In FIG. 3, the parameter msg1-FDM=4 indicates that on one time resource of RO, the frequency resource indexes of RO are index 0, index 1, index 2, and index 3.

The parameter ssb-perRACH-Occasion=1 means that one SSB is mapped to 1 RO. Therefore, following the ascending order of frequency resource indexes, SSB 0 to 3 are sequentially mapped to ROs whose time resource index is index 0 and whose frequency resource indexes are index 0, index 1, index 2, and index 3. That is, when SSB 0 is mapped to the RO with a time resource index being index 0, the frequency resource index of the RO is index 0, and so on.

Since the number of SSBs is 8, the SSBs have not been mapped yet. Therefore, according to the above "mapping principle", following the ascending order of frequency resource indexes, SSBs 4 to 7 are sequentially mapped to ROs whose time resource index is index 2 and whose frequency resource indexes are index 0, index 1, index 2, and index 3, and so on.

[Example 3]

For example, 8 SSBs with indexes 0 to 7 are configured for a cell, and the parameter msg1-FDM=4, and the parameter ssb-perRACH-Occasion=2. In this case, the mapping relationship between SSB and RO is shown in FIG. 4.

In FIG. 4, the parameter msg1-FDM=4 indicates that on one time resource of RO, the frequency resource indexes of RO are index 0, index 1, index 2, and index 3.

The parameter ssb-perRACH-Occasion=2 means that two SSBs are mapped to 1 RO.

The specific mapping is as follows:
SSB 0/1 is mapped to an RO whose time resource index is index 0 and whose frequency resource index is index 0; SSB 2/3 is mapped to an RO whose time resource index is index 0 and whose frequency resource index is index 1; SSB 4/5 is mapped to an RO whose time resource index is index 0 and whose frequency resource index is index 2; SSB 6/7 is mapped to an RO whose time resource index is index 0 and whose frequency resource index is index 3.

The same applies to the rest.

[CSI-RS mapping with RO]

CSI-RS is similar to SSB, and there is a correspondence between CSI-RS ID and beam. If a random access procedure is triggered by a high layer request and CSI-RS index is associated with RO, in case that the parameter ra-PreambleIndex is not 0, the parameter ra-OccasionList indicates an RO set associated with the CSI-RS Index.

[PRACH transmission]

During a random access procedure, the terminal device can use RO to transmit (carry) Msg1. There are three ways to trigger the random access procedure:

● PDCCH order triggering: the network device notifies the terminal device through a special DCI format 1_0 that a random access procedure needs to be initiated, and notifies the terminal device of ra-PreambleIndex, SSB Index, PRACH Mask Index, and UL/SUL indicator indicating UL or SUL that is to be used;
● MAC layer triggering: the terminal device selects the RA preamble to initiate a random access procedure;
● RRC layer triggering: such as initial access, re-establishment, handover, switching from RRC_INACTIVE to RRC_CONNECTED state, request for other SI, RRC request during synchronization reconfiguration, etc.

To transmit Msg1, the terminal device needs to perform the following operations:

♦ selecting SSB or CSI-RS

It is to be noted that a value range of the RA preamble index is associated (mapped/corresponded) with the SSB index or the CSI-RS index, and the SSB index or the CSI-RS index has a mapping relationship with the RO.

When selecting an SSB, the terminal device can obtain SS-RSRP of each SSB through channel estimation, and then compare the SS-RSRP of each SSB with the parameter rsrp-ThresholdSSB. If there is an SSB whose SS-RSRP is greater than the parameter rsrp-ThresholdSSB, the terminal device selects the SSB; otherwise, the terminal device selects an SSB at random. If the SS-RSRP of multiple SSBs is greater than the parameter rsrp-ThresholdSSB, the terminal device selects an SSB at random from the multiple SSBs. The above is only an example of a strategy for selecting an SSB, which is not limited thereto in the embodiment of the present application.

When selecting a CSI-RS, CSI-RSRP of each CSI-RS is compared with the parameter rsrp-ThresholdCSI-RS. If there is a CSI-RS whose CSI-RSRP is greater than the parameter rsrp-ThresholdCSI-RS, the terminal device selects the CSI-RS.

♦ selecting RA preamble index

The RA preamble index may be selected by the terminal device or indicated by the network device.

♦ selecting a PRACH resource used to carry (transmit) a RA preamble
♦ determining corresponding RA-RNTI

The time-frequency resource position of the RO determines a RA-RNTI value. After transmission of the RA preamble, the terminal device calculates the RA-RNTI based on the time-frequency resource position of the RO in order to receive RAR scrambled by the RA-RNTI. The formula for calculating RA-RNTI is as follows (not applicable to contention-free random access preamble used for a beam failure recovery request):

$$RA\text{-}RNTI = 1 + s\_id + 14 \times t\_id + 14 \times 80 \times f\_id + 14 \times 80 \times 8 \times ul\_carrier\_id$$

Where $s\_id$ is an index of a first OFDM symbol of the RO ($0 \leq s\_id < 14$), $t\_id$ is an index of a first slot of the RO in the system frame ($0 \leq t\_id < 80$), $f\_id$ is an index of the RO in the frequency domain ($0 \leq f\_id < 8$), and $ul\_carrier\_id$ is a UL carrier used for transmission of the RA preamble (0 indicates a normal uplink carrier, and 1 indicates a SUL carrier).

♦ determining a target reception power of the RA preamble

Third, transmission mode.
It is to be noted that the present application may involve various transmission modes, such as TDD, FDD, flexible duplex, full duplex, subband full duplex (SBFD), etc. The following describes the time domain position, frequency domain position, TDD, FDD, flexible duplex, and full duplex.

[Time domain position and frequency domain position]

The time domain position can be understood as a location of a resource used for transmission in the time domain. For example, the time domain position may include one of a subframe, a slot, a symbol, a mini slot, etc., which is not specifically limited thereto.
The frequency domain position can be understood as a location of a resource used for transmission in the frequency domain. For example, the frequency domain position may include one of a subband, a resource block (RB), a resource element (RE), a subcarrier, etc., which is not specifically limited thereto.
It is to be noted that the subband here can be understood as a sub-frequency band partitioned from a segment of bandwidth, where this bandwidth can be a bandwidth part (BWP).
Optionally, the same time domain position or the same frequency domain position may only support uplink transmission or only support downlink transmission. In other words, at the same time domain position or the same frequency domain position, the transmission direction is the same and is determined according to the transmission mode.
Optionally, the same time domain position or the same frequency domain position can support both uplink transmission and downlink transmission. In other words, the transmission directions at the same time domain position or the same frequency domain position are different, and are determined according to the transmission mode.

[TDD and FDD]

For TDD, at the same frequency domain position, uplink transmission and downlink transmission use different time domain positions respectively, and the transmission direction at the same time domain position is the same, that is, either uplink transmission or downlink transmission.
For example, by taking the time domain position being a slot as an example, the network configures a slot n and a slot n+1 to support downlink transmission, and configures a slot n+2 to support uplink transmission. At this point, the network device and the terminal device can only perform downlink communication in the slot n and slot n+1, and the network device and the terminal device can only perform uplink communication in the slot n+2.
For FDD, at the same time domain position, uplink transmission and downlink transmission use different frequency domain positions respectively, and the transmission direction at the same frequency domain position is the same, that is, either uplink transmission or downlink transmission.

[Flexible duplex]

It is to be noted that the flexible duplex may include flexible TDD duplex and/or flexible FDD duplex. The flexible duplex can be used to meet different transmission requirements and improve flexibility of the transmission mode.

For TDD duplex, at the same frequency domain position, there are flexible time domain position and non-flexible time domain position.

The non-flexible time domain position can be understood as one whose supported transmission direction does not change dynamically, which is similar to the above description for "TDD".

The flexible time domain position can be understood as one whose supported transmission direction can change dynamically. That is, for the same flexible time domain location, the network can schedule/configure it to support downlink transmission for a certain cell or a certain terminal device, while scheduling/configuring it to support uplink transmission for another cell or another terminal device.

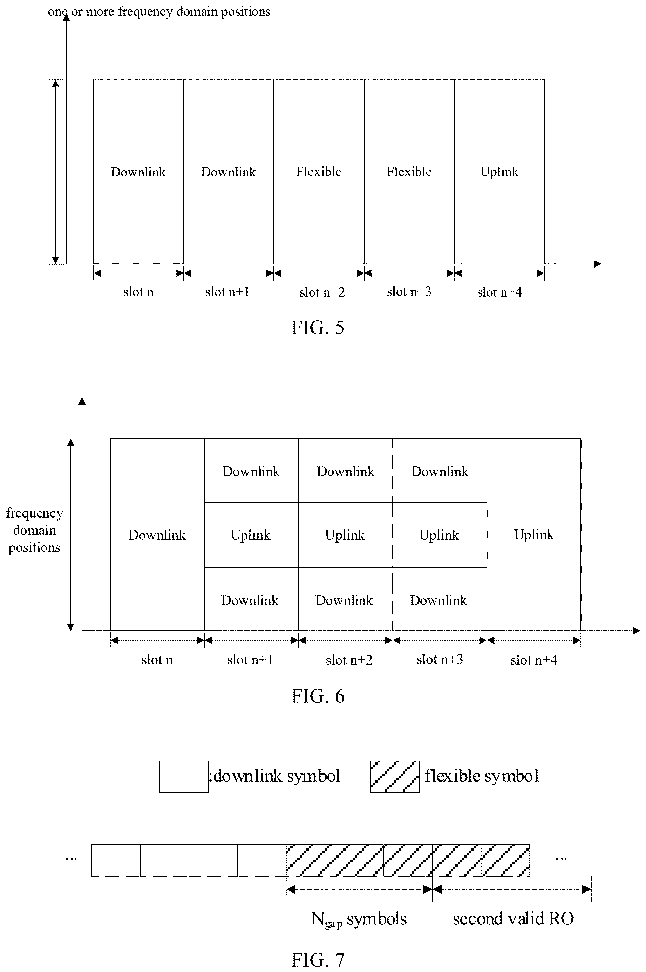

For example, by taking the time domain position being a slot as an example, as shown in FIG. 5, at one or more frequency domain positions, the network configures a slot n and a slot n+1 to support downlink transmission, configures a slot n+4 to support uplink transmission, and configures a slot n+2 and a slot n+3 as flexible.

[Full duplex]

It is to be noted that for full duplex, it can be understood as that the same time domain position or the same frequency domain position can support uplink transmission and downlink transmission at the same time; or, different frequency domain positions at the same time domain position can respectively support uplink transmission and downlink transmission; or, different time domain positions at the same frequency domain position can respectively support uplink transmission and downlink transmission.

For example, by taking the time domain position being a slot as an example, as shown in FIG. 6, the network configures as follows:

a slot n supporting downlink transmission; a slot n+1, a slot n+2 and a slot n+3 all supporting uplink transmission and downlink transmission at the same time, that is, for the slot n+1, slot n+2 and slot n+3, there are frequency domain positions supporting uplink transmission and frequency domain positions supporting downlink transmission; a slot n supporting uplink transmission.

[SBFD]

In the TDD system, all frequency resources of a TDD carrier need to have the same transmission direction at the same time, that is, uplink or downlink, which also results in the inability to flexibly configure uplink and downlink slot ratios of different frequency resources on the TDD carrier. In addition, with the diversification of services, especially considering service needs of vertical industries, different services have varying needs for uplink and downlink transmission, which makes a single uplink and downlink slot ratio insufficient to meet the needs of different services.

In view of this, in order to avoid the limitation of uplink and downlink time slot ratio as much as possible and taking into account the complexity of base station implementation, 3GPP is discussing SBFD, which is to divide non-overlapping uplink sub-bands and downlink sub-bands in the frequency domain of the same TDD carrier so as to support uplink and downlink transmission at the same time.

In view of this, in order to avoid the limitation on the uplink and downlink slot ratio as much as possible while considering base station implementation complexity, 3GPP is discussing SBFD, which divides non-overlapping uplink and downlink subbands in the frequency domain of the same TDD carrier, thereby supporting uplink and downlink transmission at the same time.

Optionally, the network may configure SBFD through network signaling (such as DCI, MAC signaling, system information, etc.), and SBFD may be in different specific forms.

For example, a downlink symbol in a slot can originally only support downlink transmission. Now, the network can configure a portion of uplink subbands in the frequency domain of the downlink symbol so that the downlink symbol can support uplink transmission and downlink transmission, thereby realizing configuration of SBFD operation.

For another example, for a flexible symbol in a slot, the network can originally only configure it for either uplink or downlink transmission, but not for both simultaneously. Now, the network can configure a portion of uplink subbands and a portion of downlink subbands in the frequency domain of the flexible symbol, so that the flexible symbol can support uplink transmission and downlink transmission, thereby realizing configuration of SBFD operation.

For another example, an uplink symbol in a slot can originally only be used for uplink transmission. Now, the network can configure a portion of downlink subbands in the frequency domain of the uplink symbol, so that the uplink symbol can support uplink transmission and downlink transmission, thereby realizing configuration of SBFD operation.

Fourth, a PRACH transmission enhancement method.

1. Description

Due to the limitations of the uplink and downlink slot ratio in the TDD system, and the fact that SBFD enables simultaneous uplink and downlink transmission at the same time, which is beneficial to improving spectrum utilization efficiency and flexibility, the present application can integrate SBFD with PRACH transmission to achieve enhanced PRACH transmission.

In specific implementation, since PRACH transmission involves using ROs to transmit RA preamble message, and traditional ROs are generally obtained through non-SBFD configuration, the present application enables the network to configure SBFD and obtain ROs resulting from the SBFD configuration. Then PRACH transmission is performed on a first valid RO, so that SBFD is integrated with PRACH transmission, thereby achieving enhanced PRACH transmission.

In combination with the above content, the technical solutions, beneficial effects, concepts, etc. involved in the embodiments of the present application are described hereinafter.

2. Detailed description

It is to be noted that the contents in the following sections may be combined and related to each other, may be parallel to each other, or may be independent of each other, and there is no specific limitation on this.

1) Non-SBFD symbol and SBFD symbol

[symbol]

The "symbol" mentioned in the present application may be an OFDM symbol, which may include a downlink symbol, an uplink symbol, and a flexible symbol.

The downlink symbol can only support downlink transmission; the uplink symbol can only support downlink transmission; the flexible symbol can be configured by the network to support uplink transmission or downlink transmission, that is, only one transmission mode is supported.

Optionally, the symbol may be configured by the network through network signaling (such as MAC signaling, MAC CE, DCI, system information, etc.).

[Non-SBFD symbol]

The non-SBFD symbol can be understood as a symbol that is not/is not configured for SBFD operation, or an original symbol in a slot.

In other words, the original symbol's attribute of supporting uplink or downlink transmission has not changed because SBFD is not configured. That is, the original downlink symbol can only support downlink transmission; the original uplink symbol can only support downlink transmission; the original flexible symbol can be configured by the network to support uplink or downlink transmission, that is, only one transmission mode is supported.

It is to be noted that, in order to distinguish from the SBFD symbol appearing below, the present application introduces "non-SBFD downlink symbol", "non-SBFD uplink symbol" and "non-SBFD flexible symbol".

The non-SBFD downlink symbol can be understood as a downlink symbol that is not configured for SBFD operation or an original downlink symbol. Therefore, the non-SBFD downlink symbol can only support downlink transmission.

The non-SBFD uplink symbol can be understood as an uplink symbol that is not configured for SBFD operation or an original uplink symbol. Therefore, the non-SBFD uplink symbol can only support uplink transmission.

The non-SBFD flexible symbol can be understood as a flexible symbol that is not configured for SBFD operation, or an original flexible symbol. Therefore, the non-SBFD flexible symbol can be configured by the network to support uplink transmission or downlink transmission, that is, only one transmission mode is supported.

Optionally, the non-SBFD symbols may include a non-SBFD downlink symbol, a non-SBFD uplink symbol, and a non-SBFD flexible symbol, and may include an original downlink symbol, an original uplink symbol, and an original flexible symbol.

[SBFD symbol]

The SBFD symbol can be understood as a symbol that has been configured for SBFD operation.

That is, the original symbol's attribute of supporting uplink or downlink transmission changes because SBFD is configured.

It is to be noted that, in order to distinguish from the non-SBFD symbol mentioned above, the present application introduces "SBFD downlink symbol", "SBFD uplink symbol" and "SBFD flexible symbol".

The SBFD downlink symbol can be understood as a downlink symbol configured for SBFD operation. Therefore, the SBFD downlink symbol can support downlink transmission and uplink transmission.

For example, the network may configure a portion of uplink subbands in the frequency domain of an original downlink symbol in a slot through network signaling, so that the downlink symbol can support uplink transmission and downlink transmission, thereby realizing configuration of SBFD operation.

The SBFD uplink symbol can be understood as an uplink symbol configured for SBFD operation. Therefore, the SBFD uplink symbol can support uplink transmission and downlink transmission.

For example, the network can configure a portion of downlink subbands in the frequency domain of an original uplink symbol in a slot through network signaling, so that the uplink symbol can support uplink transmission and downlink transmission, thereby realizing configuration of SBFD operation.

The SBFD flexible symbol can be understood as a flexible symbol configured for SBFD operation. Therefore, the SBFD flexible symbol can be configured by the network to support uplink transmission and downlink transmission, that is, uplink and downlink transmissions are supported at the same time.

For example, the network may configure a portion of uplink subbands and a portion of downlink subbands in the frequency domain of an original flexible symbol in a slot through network signaling, so that the flexible symbol can support uplink transmission and downlink transmission, thereby realizing configuration of SBFD operation.

Optionally, the SBFD symbol may include a SBFD downlink symbol, a SBFD uplink symbol, and a SBFD flexible symbol.

2) Legacy RO

[Description]

For PRACH transmission in a traditional communication system (such as a TDD system or an FDD system), the traditional communication system configures an RO and transmits the RA preamble/random access request message on the RO. In order to facilitate distinction from the following PRACH transmission in the SBFD communication system, in the present application, the RO configured by the traditional communication system may be referred as a "legacy RO". Optionally, ROs obtained by the non-SBFD configuration may include a valid RO and/or an invalid RO. The valid RO can be used to transmit a RA preamble/random access request message, while the invalid RO cannot be used to transmit the RA preamble/random access request message.

In addition, in order to distinguish from the "first valid RO" that appears later, in the present application, the valid RO in the legacy ROs may be referred as "second valid RO".

[Second valid RO]

Combined with the content about "valid RO" in the above "SSB mapping with RO and SSB mapping with RA preamble", the second valid RO can be defined as follows:

the second valid RO is in a PRACH slot and is in a non-SBFD uplink symbol (i.e., uplink symbol) or a non-SBFD flexible symbol (i.e., flexible symbol); and the second valid RO is in the PRACH slot and starts at least a preset number of symbols after a last non-SBFD downlink symbol (i.e., the last downlink symbol), and/or starts at least the preset number of symbols after an SSB symbol; or,
the second valid RO is in a PRACH slot and is in an uplink symbol or a flexible symbol, and starts at least a preset number of symbols after a last downlink symbol, and/or starts at least the preset number of symbols after an SSB symbol.

The starting at least a preset number of symbols after a non-SBFD downlink symbol, can be understood as that the second valid RO starts from at least a preset number of symbols after the last non-SBFD downlink symbol.

Optionally, the preset number of symbols may include $N_{gap}$ symbols.

For example, by taking the preset number of symbols being $N_{gap}$ symbols as an example, as shown in FIG. 7, the second valid RO starts from at least $N_{gap}$ ($N_{gap}=3$) symbols after the last downlink symbol (i.e., non-SBFD downlink symbol).

Optionally, the second valid RO may be configured by using random access channel configuration.

The random access channel configuration may be transmitted by the network through network signaling, so that the network configures the second valid RO through the random access channel configuration.

For example, in combination with the content in the above "second, random access procedure", the random access channel configuration may include a high layer parameter RACH-ConfigGeneric. The high layer parameter RACH-ConfigGeneric may include a parameter prach-ConfigurationIndex, a parameter msg1-FrequencyStart, and a parameter msg1-FDM.

3) RO obtained by SBFD configuration

[description]

For PRACH transmission in a communication system configured with SBFD (hereinafter referred to as SBFD communication system), the SBFD communication system configures RO and transmits a RA preamble/random access request message on RO. In order to distinguish it from the PRACH transmission of the traditional communication system mentioned above, in the present application, the RO configured by the SBFD communication system may be referred as "RO obtained by SBFD configuration".

Optionally, the RO obtained by SBFD configuration may include a valid RO and/or an invalid RO. The valid RO can be used to transmit a RA preamble/random access request message, while the invalid RO cannot be used to transmit the RA preamble/random access request message.

In addition, in order to distinguish from the "second valid RO" mentioned above, in the present application, the valid RO among the ROs obtained by SBFD configuration may be referred as "first valid RO".

[First valid RO]

Different from the content about "valid RO" in the above "SSB mapping with RO and SSB mapping with RA preamble", the present application needs to specifically define "first valid RO". That is, the present application needs to define which ROs can be used as valid ROs from the ROs obtained by SBFD configuration.

The following provides a variety of definition methods, and the various methods may be independent of each other, may be interrelated, or may be combined to form a new method, so as to adapt to various scenario requirements and improve flexibility of PRACH transmission.

[Method 1]

In the "method 1", the present application considers the case of switching from a non-SBFD downlink symbol to an SBFD symbol. The RO obtained by the SBFD configuration is defined from the frequency domain perspective and the time domain perspective respectively.

♦Frequency domain perspective

From the frequency domain perspective, the present application may define an RO in an uplink subband of an SBFD symbol as a valid RO. The SBFD symbol here may include an SBFD downlink symbol, an SBFD uplink symbol, and an SBFD flexible symbol.

That is, the first valid RO may be in the uplink subband of the SBFD symbol.

In this way, since the uplink subband can support uplink transmission, the RO in the uplink subband can support transmission of the RA preamble/random access request message, so that the RO can be regarded as valid.

Optionally, the first valid RO in the uplink subband of the SBFD symbol, may include: all resource blocks (RB) of the first valid RO are in the uplink subband of the SBFD symbol.

It is understandable that all RBs of the first valid RO need to be in the uplink subband of the SBFD symbol. In this way, all RBs of the first valid RO can support uplink transmission.

Optionally, the first valid RO in an uplink subband of the SBFD symbol, may include:
a portion of resource blocks (RBs) of the first valid RO are in an uplink subband of an SBFD flexible symbol, and a remaining portion of the RBs of the first valid RO are in a downlink subband of the SBFD flexible symbol.

It is understandable that a portion of the RBs of the first valid RO may be in the uplink subband of the SBFD symbol, and this portion of the RBs can support uplink transmission. In this way, in the present application, this portion of the RBs can still be used to transmit PRACH, without deeming the entire RB unusable for uplink transmission because the remaining portion of the RBs lies in the downlink subband, thereby helping to improve spectrum utilization efficiency.

♦Time domain perspective

From the time domain perspective, the present application may define an RO that starts at least a preset number of symbols after switching from a non-SBFD downlink symbol to an SBFD symbol.

That is, the first valid RO may start at least a preset number of symbols after switching from a non-SBFD downlink symbol to an SBFD symbol.

The starting at least a preset number of symbols after switching from a non-SBFD downlink symbol to an SBFD symbol, can be understood as that the first valid RO starts from at least a preset number of symbols after switching from the non-SBFD downlink symbol to the SBFD symbol.

The SBFD symbol here may include an SBFD downlink symbol, an SBFD uplink symbol, and an SBFD flexible symbol.

The preset number of symbols may include $N_{gap}$ symbols.

In this way, since there is an interval of at least a preset number of symbols between the first valid RO and the non-SBFD downlink symbol in the time domain, the symbols in this interval are used to avoid interference between uplink transmission and downlink transmission.

◆ Example description

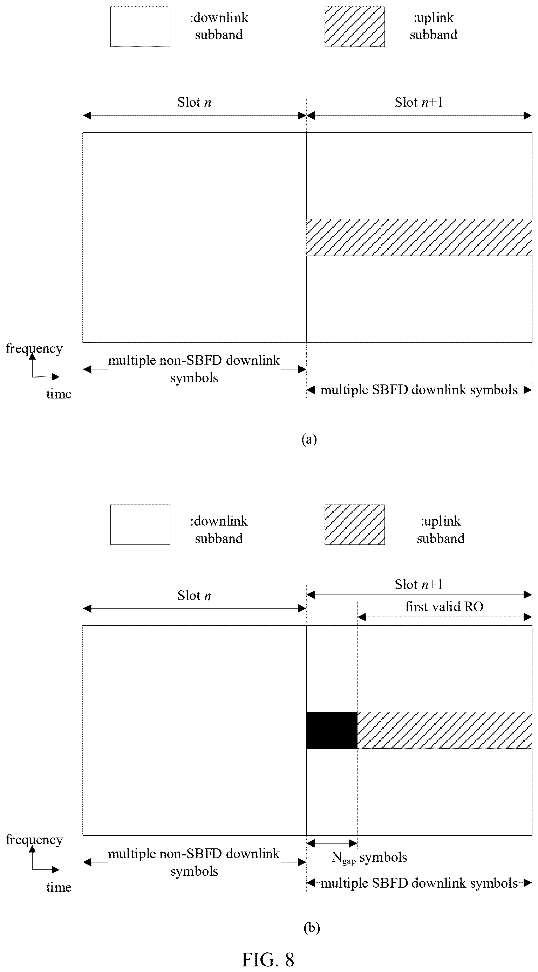

By taking the SBFD symbol being an SBFD downlink symbol as an example, as shown in FIG. 8, there are multiple non-SBFD downlink symbols in a slot n, and the non-SBFD downlink symbols have only downlink subbands; there are multiple SBFD downlink symbols in a slot n+1, and the SBFD downlink symbols have uplink subbands and downlink subbands. FIG. 8(a) illustrates the case where a valid RO has not been defined, and FIG. 8(b) illustrates the case where a valid RO has been defined.

In FIG. 8(b), for the case of switching from a non-SBFD downlink symbol in the slot n to a SBFD downlink symbol in the slot n+1, the first valid RO is in the uplink subband of the SBFD downlink symbol and starts from at least $N_{gap}$ symbols after switching from the non-SBFD downlink symbol to the SBFD downlink symbol.

[Method 2]

In the "method 2", the present application considers the case of switching from a non-SBFD uplink symbol or non-SBFD flexible symbol to an SBFD symbol. The RO obtained by the SBFD configuration is defined from the frequency domain perspective and the time domain perspective respectively.

◆ Frequency domain perspective

From the frequency domain perspective, the present application may define an RO in an uplink subband of an SBFD symbol as a valid RO. The SBFD symbol here may include an SBFD downlink symbol, an SBFD uplink symbol, and an SBFD flexible symbol.

That is, the first valid RO may be in the uplink subband of the SBFD symbol.

In this way, since the uplink subband can support uplink transmission, the RO in the uplink subband can support transmission of the RA preamble/random access request message, so that the RO can be regarded as valid.

Optionally, the first valid RO in the uplink subband of the SBFD symbol, may include: all RBs of the first valid RO are in the uplink subband of the SBFD symbol.

It is understandable that all RBs of the first valid RO need to be in the uplink subband of the SBFD symbol. In this way, all RBs of the first valid RO can support uplink transmission.

Optionally, the first valid RO in an uplink subband of the SBFD symbol, may include:

a portion of resource blocks (RBs) of the first valid RO are in an uplink subband of an SBFD flexible symbol, and a remaining portion of the RBs of the first valid RO are in a downlink subband of the SBFD flexible symbol.

It is understandable that a portion of the RBs of the first valid RO may be in the uplink subband of the SBFD symbol, and this portion of the RBs can support uplink transmission. In this way, in the present application, this portion of the RBs can still be used to transmit PRACH, without deeming the entire RB unusable for uplink transmission because the remaining portion of the RBs lies in the downlink subband, thereby helping to improve spectrum utilization efficiency.

◆ Time domain perspective

From the time domain perspective, the present application may define an RO after switching from a non-SBFD uplink symbol or a non-SBFD flexible symbol to an SBFD symbol as a valid RO.

That is, the first valid RO may start after switching from a non-SBFD uplink symbol or a non-SBFD flexible symbol to an SBFD symbol.

It is to be understood that the difference between the "method 2" and the "method 1" is that there is no at least a preset number of symbols as an interval in the time domain.

The SBFD symbol here may include an SBFD downlink symbol, an SBFD uplink symbol, and an SBFD flexible symbol.

The preset number of symbols may include $N_{gap}$ symbols.

In this way, since the non-SBFD uplink symbol or SBFD flexible symbol can originally support uplink transmission, when switching from the non-SBFD uplink symbol or SBFD flexible symbol to the SBFD symbol, there is no need to set an interval in the time domain between the valid RO and the non-SBFD uplink symbol or non-SBFD flexible symbol, which is beneficial to improving resource utilization.

♦ Example description

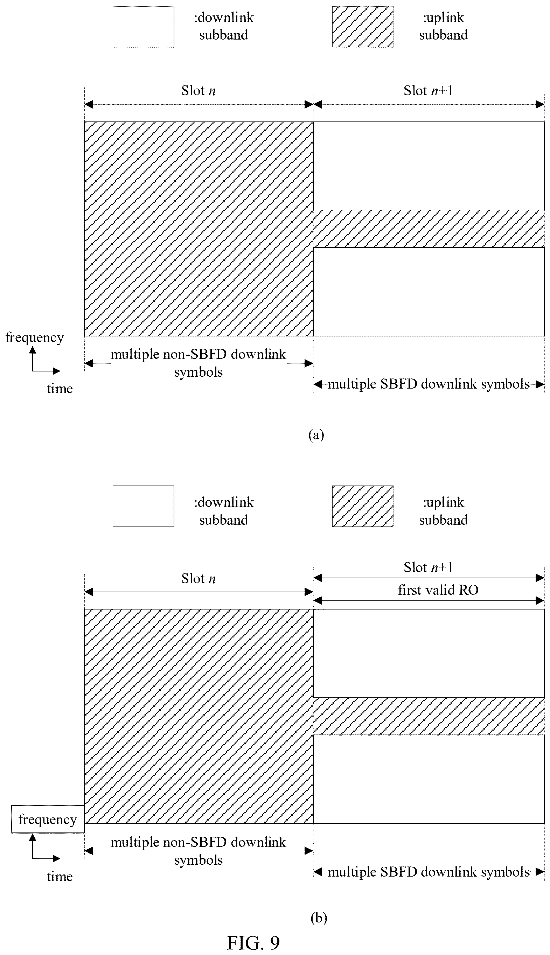

By taking non-SBFD uplink symbol as an example, as shown in FIG. 9, there are multiple non-SBFD uplink symbols in a slot n, and the non-SBFD uplink symbols have only uplink subbands; there are multiple SBFD downlink symbols in a slot n+1, and the SBFD downlink symbols have uplink subbands and downlink subbands. FIG. 9(a) illustrates the case where a valid RO has not been defined, and FIG. 9(b) illustrates the case where a valid RO has been defined.

In FIG. 9(b), for the case of switching from a non-SBFD uplink symbol in the slot n to a SBFD downlink symbol in the slot n+1, the first valid RO is in the uplink subband of the SBFD downlink symbol and starts at the switch from the non-SBFD uplink symbol to the SBFD downlink symbol.

[Method 3]

In the "method 3", the present application considers the case of switching from an SBFD symbol to a non-SBFD flexible symbol. The RO obtained by the SBFD configuration is defined from the time domain perspective and the frequency domain perspective.

♦ Time domain perspective

From the time domain perspective, the present application may define an RO that is in at least a preset number of symbols after switching from an SBFD symbol to a non-SBFD flexible symbol.

That is, the valid RO obtained by the SBFD configuration is in at least a preset number of symbols after switching from an SBFD symbol to a non-SBFD flexible symbol.

The SBFD symbol here may include an SBFD downlink symbol, an SBFD uplink symbol, and an SBFD flexible symbol.

The preset number of symbols may include $N_{gap}$ symbols.

It is to be noted that, in combination with the above definition of "second valid RO", the second valid RO may include a non-SBFD flexible symbol. However, under the SBFD configuration, in the present application, RO in at least a preset number of symbols after switching from an SBFD symbol to a non-SBFD flexible symbol, can be used as a valid RO, and this valid RO may be regarded as a newly added valid RO to the second valid RO, and this newly added valid RO is used to transmit PRACH, which is conducive to improving the spectrum utilization efficiency.

♦ Frequency domain perspective

From the frequency domain perspective, the present application may define that the first valid RO has a same frequency domain position as an uplink subband of an SBFD symbol.

The SBFD symbol here can be understood as an SBFD symbol involved in the switching from an SBFD symbol to a non-SBFD flexible symbol.

The SBFD symbol here may include an SBFD downlink symbol, an SBFD uplink symbol, and an SBFD flexible symbol; the preset number of symbols may include $N_{gap}$ symbols.

♦ Example description

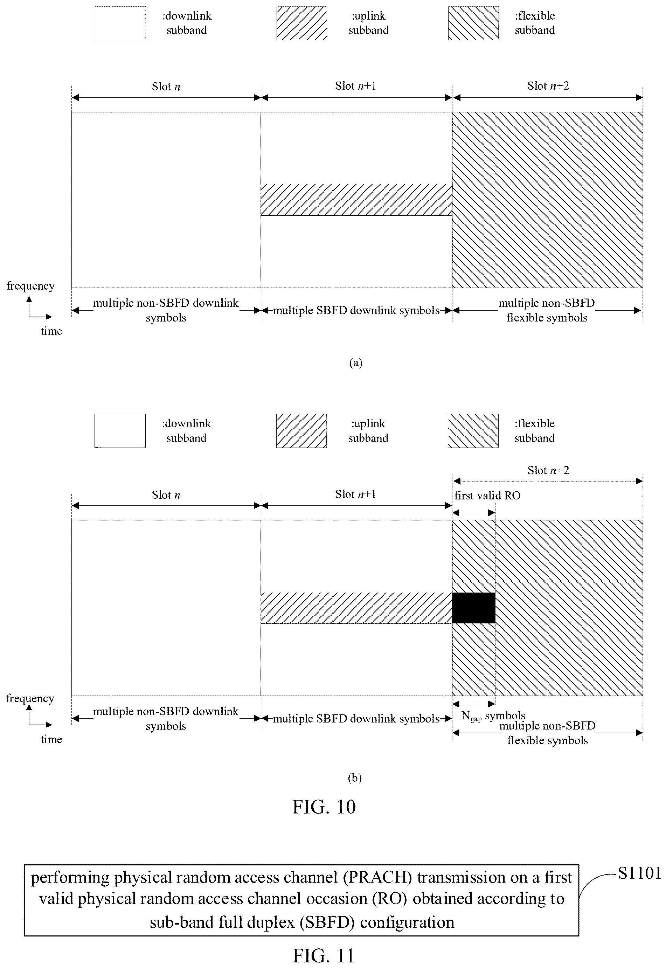

By taking the SBFD symbol being an SBFD downlink symbol as an example, as shown in FIG. 10, there are multiple non-SBFD downlink symbols in a slot n, and the non-SBFD downlink symbols have only a downlink subband; there are multiple SBFD downlink symbols in a slot n+1, and the SBFD downlink symbols have an uplink subband and a downlink subband; there are multiple non-SBFD flexible symbols in a slot n+2, and the non-SBFD flexible symbols have a flexible subband, and the flexible subband can be configured by the network to support uplink transmission or downlink transmission. FIG. 10(a) illustrates the case where a valid RO has not been defined, and FIG. 10(b) illustrates the case where a valid RO has been defined.

In FIG. 10(b), for the case of switching from the SBFD downlink symbol in the slot n+1 to the non-SBFD flexible symbol in the slot n+2, the first valid RO is in at least $N_{gap}$ symbols after switching the SBFD downlink symbol to the non-SBFD flexible symbol, and has the same frequency domain position as the uplink subband of the SBFD downlink symbol.

[Method 4]

In the "method 4", combined with the content in the above "second, random access procedure", the network can configure a frequency domain position of an RO in the SBFD communication system through parameters msg1-FrequencyStart and msg1-FDM in high layer parameter RACH-ConfigGeneric.

Since the parameter msg1-FDM configures multiple frequency domain ROs at the same time domain position, in this case, multiple frequency domain ROs at the same time domain position exist in the ROs obtained by the SBFD configuration.

At this point, for all frequency domain ROs at the same time domain position, some of these frequency domain ROs may be in the uplink subband of the SBFD symbol while the rest of these frequency domain ROs are in the downlink subband, all frequency domain ROs may be in the uplink subband of the SBFD symbol, and all frequency domain ROs may be in the downlink subband of the SBFD symbol. Therefore, the present application defines the following:

♦ if all the frequency domain ROs are in the uplink subband of the SBFD symbol, then all the frequency domain ROs are valid ROs.

That is, the first valid RO may be all frequency domain ROs at the same time domain position, and all the frequency domain ROs are in the uplink subband of the SBFD downlink symbol.

In this way, since the uplink subband can support uplink transmission, all frequency domain ROs in the uplink subband can support transmission of RA preamble/random access request message, so that all frequency domain ROs can be regarded as valid.

♦ if partial frequency domain ROs among all the frequency domain ROs are in the uplink subband of the SBFD symbol, then the partial frequency domain ROs are valid ROs.

That is, the first valid RO may be partial frequency domain ROs that are only in an uplink subband of an SBFD symbol, among all frequency domain ROs at a same time domain position.

It is to be understood that the valid RO includes partial frequency domain ROs that are in an uplink subband of an SBFD symbol, and these partial frequency domain ROs can support uplink transmission.

In this way, in the present application, these partial frequency domain ROs can still be used to transmit PRACH, without deeming all frequency domain ROs at the same time domain position unusable for uplink transmission because the remaining frequency domain ROs lies in the downlink subband, thereby helping to improve spectrum utilization efficiency.

[Method 5]

In the "method 5", combined with the above content in "second, random access procedure", the network can configure a time domain position of an RO in the SBFD communication system through a parameter prach-ConfigurationIndex in a high layer parameter RACH-ConfigGeneric.

Since the RO configured by the parameter prach-ConfigurationIndex may include multiple symbols, and these symbols may include an SBFD symbol and/or a non-SBFD symbol, thus for the RO obtained by the SBFD configuration, some of the symbols in the RO may be SBFD symbols and the rest of the symbols may be non-SBFD symbols, or all the symbols may be SBFD symbols, or all the symbols may be non-SBFD symbols. Therefore, the present application defines the following:

♦ if some symbols of an RO are in an uplink subband of an SBFD symbol, and the remaining symbols of the RO are in a non-SBFD uplink symbol or a non-SBFD flexible symbols the RO is a valid RO.

That is, some symbols of the first valid RO are in the uplink subband of the SBFD symbol, and the remaining symbols are in a non-SBFD uplink symbol or non-SBFD flexible symbol.

In this way, since the uplink subband of the SBFD symbol can support uplink transmission, and the non-SBFD uplink symbol or non-SBFD flexible symbol can also support uplink transmission, although symbols of the RO span different symbols, because they can support transmission of RA preamble/random access request message, thus the RO can be regarded as valid.

4) Mapping relationship between RO and SSB

Combined with the content in the above "second, random access procedure", it can be known that the network device configures the mapping relationship between RO and SSB through the high layer parameter ssb-perRACH-OccasionAndCB-PreamblesPerSSB to implement PRACH transmission. Therefore, the mapping relationship between RO and SSB also needs to be studied for the PRACH transmission in the SBFD communication system discussed in the present application.

Since the present application involves "first valid RO" and "second valid RO", in the present application, one of the following two methods can be flexibly selected for the RO-to-SSB mapping according to scenario requirements/network configuration, etc., to improve the flexibility of PRACH transmission.

[First method]

In the "first method", the mapping between ROs and synchronization signal blocks (SSBs) is jointly and uniformly applied for the first valid RO and the second valid RO.

That is, the first valid RO and the second valid RO are taken as a whole RO to uniformly perform the mapping between the RO and the SSB.

In this way, since the mapping between RO and SSB is performed in a joint and unified manner, SSB can support SBFD and non-SBFD, thereby improving compatibility of the communication system.

Optionally, the mapping relationship between the overall RO and SSB may be performed in the following order:

first, RA preamble indexes in an RO are arranged in ascending order;
second, frequency resource indexes for frequency-division multiplexed ROs are arranged in ascending order.
third, time resource indexes for time-division multiplexed ROs in a PRACH slot are arranged in ascending order;
finally, PRACH slot indexes are arranged in ascending order.

The details can refer to the above example 1, example 2, and example 3, which will not be repeated here.

[Second method]

In the "second method", mapping between ROs and synchronization signal blocks (SSBs) is applied separately for the first valid RO and second valid RO.

That is, the first valid RO is individually mapped to the SSB, and the second valid RO is individually mapped to the SSB.

In this way, since the mapping between RO and SSB is applied separately, although SSB cannot support SBFD and non-SBFD, this approach can ensure stability of the communication system and reduce complexity of the communication system.

Optionally, the first valid RO or the second valid RO may be mapped to the SSB separately in the following order:

first, RA preamble indexes in an RO are arranged in ascending order;
second, frequency resource indexes for frequency-division multiplexed ROs are arranged in ascending order.
third, time resource indexes for time-division multiplexed ROs in a PRACH slot are arranged in ascending order;
finally, PRACH slot indexes are arranged in ascending order.

The details can refer to the above example 1, example 2, and example 3, which will not be repeated here.

5) Configuration process of RO obtained by SBFD configuration

It is to be noted that the first valid RO of the present application can be configured by using random access channel configuration.

The random access channel configuration may be transmitted by the network through network signaling, so that the network configures the second valid RO through the random access channel configuration.

For example, in combination with the content in the above "second, random access procedure", the random access channel configuration may include a high layer parameter RACH-ConfigGeneric. The high layer parameter RACH-ConfigGeneric may include a parameter prach-ConfigurationIndex, a parameter msg1-FrequencyStart, and a parameter msg1-FDM.

Since the second valid RO is also configured by using the random access channel configuration, the present application needs to explain the random access channel configuration used by the first valid RO and the random access channel configuration used by the second valid RO.

Optionally, the first valid RO and the second valid RO may be configured by using a single random access channel configuration.

In this way, since the same random access channel configuration is used for configuration, the network can use the same set of random access channel configuration to uniformly configure ROs for the traditional communication system and the SBFD communication system, thereby facilitating improvement of compatibility of the communication system.

Optionally, the first valid RO and the second valid RO may be configured by using different random access channel configurations respectively.

In this way, since different random access channel configurations are used for configuration, the network can use different random access channel configurations to independently configure RO to the traditional communication system and the SBFD communication system, thereby facilitating improving stability of the communication system and reducing the complexity of the communication system.

Optionally, if an SBFD flexible symbol where the first valid RO is located comes from a non-SBFD flexible symbol, the RO obtained by the SBFD configuration and the RO obtained by the non-SBFD configuration are configured by using a single random access channel configuration.

It is to be noted that when the network configures a non-SBFD flexible symbol as an SBFD flexible symbol and configures a valid RO on the SBFD flexible symbol, since the configuration from the non-SBFD flexible symbol to the SBFD flexible symbol requires switching from the traditional communication system to the SBFD communication system, and since the non-SBFD flexible symbol and the SBFD flexible symbol are configured to support uplink transmission, in order to minimize the time required for switching or to avoid the inability to continue to support communication due to switching between different communication systems, the network can use the same set of random access channel configuration to uniformly configure ROs to the traditional communication system and the SBFD communication system, which is beneficial to improving the compatibility of the communication system.

Optionally, if an SBFD flexible symbol where the first valid RO is located comes from a non-SBFD flexible symbol, the RO obtained by the SBFD configuration and the RO obtained by the non-SBFD configuration are configured by using different random access channel configurations.

It is to be noted that since the configuration from the non-SBFD flexible symbol to the SBFD flexible symbol requires switching from the traditional communication system to the SBFD communication system, but since different communication systems may have poor compatibility, the network can use different random access channel configurations to independently configure RO to the traditional communication system and the SBFD communication system, which is beneficial to improve the stability of the communication system and reduce the complexity of the communication system.

3. Example of a PRACH transmission method

[description]

In combination with the above content, an example of a physical random access channel transmission method in an embodiment of the present application is introduced hereinafter. It is to be noted that the method can be applied to a terminal device or a network device. The terminal device can be a chip, a chip module or a communication module, etc., and the network device can be a chip, a chip module or a communication module, etc.

As shown in FIG. 11, it is a schematic flowchart of a physical random access channel transmission method according to an embodiment of the present application, which specifically includes the following steps:

S1101: performing physical random access channel (PRACH) transmission on a first valid physical random access channel occasion (RO) obtained according to sub-band full duplex (SBFD) configuration.

It is to be noted that details of "SBFD", "RO", etc. can refer to the above contents, which will not be elaborated here.

It can be seen that as PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

[Some possible implementations]

In combination with the above content, some possible implementation methods are described hereinafter, while those not mentioned can be referred to in the preceding content and will not be elaborated here.

In some possible implementations, the first valid RO is in an uplink subband of an SBFD symbol.

It is to be noted that, this can be understood in combination with the above content in the "method 1", and will not be elaborated further here.

In some possible implementations, the first valid RO starts at least a preset number of symbols after switching from a non-SBFD downlink symbol to an SBFD symbol.

It is to be noted that, this can be understood in combination with the above content in the "method 1", and will not be elaborated further here.

In some possible implementations, the first valid RO in the uplink subband of the SBFD symbol, includes: all resource blocks (RB) of the first valid RO are in the uplink subband of the SBFD symbol.

It is to be noted that, this can be understood in combination with the above content in the "method 1", and will not be elaborated further here.

In some possible implementations, the first valid RO in the uplink subband of the SBFD symbol, includes: a portion of RBs of the first valid RO is in an uplink subband of an SBFD flexible symbol, and a remaining portion of RBs is in a downlink subband of the SBFD flexible symbol.

It is to be noted that, this can be understood in combination with the above content in the "method 1", and will not be elaborated further here.

In some possible implementations, the first valid RO is in at least a preset number of symbols after switching the SBFD symbol to the non-SBFD flexible symbol; and/or,

the first valid RO has the same frequency domain position as the uplink subband of the SBFD symbol.

It is to be noted that, this can be understood in combination with the above content in the "method 3", and will not be elaborated further here.

In some possible implementations, the first valid RO includes all frequency domain ROs at the same time domain position, and all frequency domain ROs are in the uplink subband of the SBFD symbol.

It is to be noted that, this can be understood in combination with the above content in the "method 4", and will not be elaborated further here.

In some possible implementations, the first valid RO includes partial frequency domain ROs that are only in an uplink subband of an SBFD symbol, among all frequency domain ROs at a same time domain position.

It is to be noted that, this can be understood in combination with the above content in the "method 4", and will not be elaborated further here.

In some possible implementations, some symbols of the first valid RO are in an uplink subband of SBFD symbols, and remaining symbols of the first valid RO are in non-SBFD uplink symbols or non-SBFD flexible symbols.

It is to be noted that, this can be understood in combination with the above content in the "method 5", and will not be elaborated further here.

In some possible implementations, mapping between ROs and synchronization signal blocks (SSBs) is jointly and uniformly applied for the first valid RO and a second valid RO.

It is to be noted that, this can be understood in combination with the above content in "4) mapping relationship between RO and SSB", and will not be elaborated further here.

In some possible implementations, mapping between ROs and synchronization signal blocks (SSBs) is applied separately for the first valid RO and a second valid RO.

It is to be noted that, this can be understood in combination with the above content in "4) mapping relationship between RO and SSB", and will not be elaborated further here.

In some possible implementations, the first valid RO and the second valid RO are configured by using a single random access channel configuration.

It is to be noted that, this can be understood in combination with the above content in "5) configuration process of RO obtained by SBFD configuration", and will not be elaborated further here.

In some possible implementations, the first valid RO and a second valid RO are configured by using different random access channel configurations.

It is to be noted that, this can be understood in combination with the above content in "5) configuration process of RO obtained by SBFD configuration", and will not be elaborated further here.

In some possible implementations, if the SBFD flexible symbol where the first valid RO is located comes from a non-SBFD flexible symbol, the RO obtained by the SBFD configuration and the RO obtained by the non-SBFD configuration are configured using a single random access channel configuration or different random access channel configurations.

It is to be noted that, this can be understood in combination with the above content in "5) configuration process of RO obtained by SBFD configuration", and will not be elaborated further here.

In some possible implementations, the second valid RO is in a PRACH slot and is in a non-SBFD uplink symbol or a non-SBFD flexible symbol; and the second valid RO starts at least a preset number of symbols after a last non-SBFD downlink symbol, and/or starts at least the preset number of symbols after an SSB symbol; or,

the second valid RO is in a PRACH slot and is in an uplink symbol or a flexible symbol, and starts at least a preset number of symbols after a last downlink symbol, and/or starts at least the preset number of symbols after an SSB symbol.

It is to be noted that, this can be understood in combination with the above content in "2) RO obtained by non-SBFD configuration", and will not be elaborated further here.

Fifth, example of a physical random access channel transmission device.

[Description]

The above description primarily introduces the solutions of the embodiments of the present application from the perspective of the method side. It is to be understood that in order to realize the above functions, a terminal device or network device includes corresponding hardware structures and/or software modules for executing each function. It is easily appreciated by those skilled in the art that, in combination with units and algorithm steps of the various examples described in the embodiments disclosed herein, the present application can be implemented in the form of hardware or a combination of hardware and computer software. Whether a specific function is executed by hardware or by computer software driving hardware depends on the specific application scenario and design constraints of the technical solution. Those skilled in the art may use different methods for each specific application to achieve the described functions, but such implementation shall not be considered as beyond the scope of the present application.

In the embodiments of the present application, the terminal device or network device can be divided into functional units according to the above method example. For example, each functional unit can be divided according to each function, or two or more functions can be integrated into one processing unit. The above integrated unit can be implemented in the form of hardware or in the form of a software program module. It is to be noted that division of units in the embodiment of the present application is exemplary, and is only a logical function division, and there may be another division manner in actual implementation.

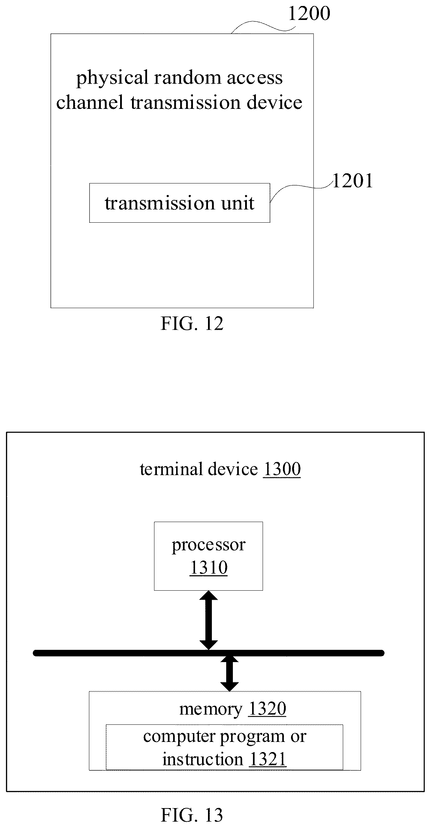

In the case of using an integrated unit, FIG. 12 is a block diagram showing functional units of a physical random access channel transmission device according to an embodiment of the present application, where a physical random access channel transmission device 1200 includes a transmission unit 1201.

In some possible implementations, the transmission unit 1201 may be a module unit for processing signals, data, information, etc., which is not specifically limited thereto.

In some possible implementations, the physical random access channel transmission device 1200 may further include a storage unit used to store computer program codes or instructions executed by the physical random access channel transmission device 1200. The storage unit may be a memory.

In some possible implementations, the physical random access channel transmission device 1200 may be a chip or a chip module.

In some possible implementations, the transmission unit 1201 may be integrated into other units.

For example, the transmission unit 1201 may be integrated into a communication unit.

For another example, the transmission unit 1201 may be integrated into a processing unit.

It is to be noted that the communication unit may be a communication interface, a transceiver, a transceiver circuit, etc.

The processing unit may be a processor or a controller, such as a baseband processor, a baseband chip, a central processing unit (CPU), a general processor, a digital signal processor (DSP), an application-specific integrated circuit (ASIC), a field programmable gate array (FPGA) or other programmable logic devices, transistor logic devices, hardware components or any combination thereof, which may implement or execute various exemplary logic blocks, modules and circuits described in conjunction with the disclosure of the present application. The processing unit may also be a combination that implements a computing function, for example, a combination of one or more microprocessors, a combination of a DSP and a microprocessor, etc.

In some possible implementations, the physical random access channel transmission device 1200 is used to execute any step executed by the terminal device/chip/chip module/network device, etc. in the above method embodiment.

In specific implementation, the transmission unit 1201 is used to execute any step in the above method embodiment. When executing actions such as sending, other units can be selectively called to complete corresponding operations. A detailed description is provided below.

The transmission unit 1201 is used to perform physical random access channel (PRACH) transmission on a first valid physical random access channel occasion (RO) obtained according to sub-band full duplex (SBFD) configuration.

It can be seen that as PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

It is to be noted that the specific implementation of each operation in the embodiment described in FIG. 12 can be found in the description of the method embodiment shown above, and will not be described in detail here.

[Some possible implementations]

Some possible implementations are described hereinafter. Some specific descriptions can be found above and will not be repeated here.

In some possible implementations, the first valid RO is in an uplink subband of an SBFD symbol.

It is to be noted that, this can be understood in combination with the above content in the "method 1", and will not be elaborated further here.

In some possible implementations, the first valid RO starts at least a preset number of symbols after switching from a non-SBFD downlink symbol to an SBFD symbol.

It is to be noted that, this can be understood in combination with the above content in the "method 1", and will not be elaborated further here.

In some possible implementations, the first valid RO in the uplink subband of the SBFD symbol, includes: all resource blocks (RB) of the first valid RO are in the uplink subband of the SBFD symbol.

It is to be noted that, this can be understood in combination with the above content in the "method 1", and will not be elaborated further here.

In some possible implementations, the first valid RO in the uplink subband of the SBFD symbol, includes: a portion of RBs of the first valid RO is in an uplink subband of an SBFD flexible symbol, and a remaining portion of RBs is in a downlink subband of the SBFD flexible symbol.

It is to be noted that, this can be understood in combination with the above content in the "method 1", and will not be elaborated further here.

In some possible implementations, the first valid RO is in at least a preset number of symbols after switching the SBFD symbol to the non-SBFD flexible symbol; and/or, the first valid RO has the same frequency domain position as the uplink subband of the SBFD symbol.

It is to be noted that, this can be understood in combination with the above content in the "method 3", and will not be elaborated further here.

In some possible implementations, the first valid RO includes all frequency domain ROs at the same time domain position, and all frequency domain ROs are in the uplink subband of the SBFD symbol.

It is to be noted that, this can be understood in combination with the above content in the "method 4", and will not be elaborated further here.

In some possible implementations, the first valid RO includes partial frequency domain ROs that are only in an uplink subband of an SBFD symbol, among all frequency domain ROs at a same time domain position.

It is to be noted that, this can be understood in combination with the above content in the "method 4", and will not be elaborated further here.

In some possible implementations, some symbols of the first valid RO are in an uplink subband of SBFD symbols, and remaining symbols of the first valid RO are in non-SBFD uplink symbols or non-SBFD flexible symbols.

It is to be noted that, this can be understood in combination with the above content in the "method 5", and will not be elaborated further here.

In some possible implementations, mapping between ROs and synchronization signal blocks (SSBs) is jointly and uniformly applied for the first valid RO and a second valid RO.

It is to be noted that, this can be understood in combination with the above content in "4) mapping relationship between RO and SSB", and will not be elaborated further here.

In some possible implementations, mapping between ROs and synchronization signal blocks (SSBs) is applied separately for the first valid RO and a second valid RO.

It is to be noted that, this can be understood in combination with the above content in "4) mapping relationship between RO and SSB", and will not be elaborated further here.

In some possible implementations, the first valid RO and the second valid RO are configured by using a single random access channel configuration.

It is to be noted that, this can be understood in combination with the above content in "5) configuration process of RO obtained by SBFD configuration", and will not be elaborated further here.

In some possible implementations, the first valid RO and a second valid RO are configured by using different random access channel configurations.

It is to be noted that, this can be understood in combination with the above content in "5) configuration process of RO obtained by SBFD configuration", and will not be elaborated further here.

In some possible implementations, if the SBFD flexible symbol where the first valid RO is located comes from a non-SBFD flexible symbol, the RO obtained by the SBFD configuration and the RO obtained by the non-SBFD configuration are configured using a single random access channel configuration or different random access channel configurations.

It is to be noted that, this can be understood in combination with the above content in "5) configuration process of RO obtained by SBFD configuration", and will not be elaborated further here.

In some possible implementations, the second valid RO is in a PRACH slot and is in a non-SBFD uplink symbol or a non-SBFD flexible symbol; and the second valid RO is in a PRACH slot and starts at least a preset number of symbols after a last non-SBFD downlink symbol, and/or starts at least the preset number of symbols after an SSB symbol; or, the second valid RO is in a PRACH slot and is in an uplink symbol or a flexible symbol, and starts at least a preset number of symbols after a last downlink symbol, and/or starts at least the preset number of symbols after an SSB symbol.

It is to be noted that, this can be understood in combination with the above content in "2) RO obtained by non-SBFD configuration", and will not be elaborated further here.

Sixth, example of a terminal device.

Referring to FIG. 13, FIG. 13 is a schematic diagram of a terminal device according to an embodiment of the present application. The terminal device 1300 may include a processor 1310, a memory 1320, and a communication bus for coupling the processor 1310 to the memory 1320.

In some possible implementations, the memory 1320 includes but is not limited to random access memory (RAM), read-only memory (ROM), erasable programmable read-only memory (EPROM) or compact disc read-only memory (CD-ROM). The memory 1320 is used to store program codes executed by the terminal device 1300 and transmitted data.

In some possible implementations, the terminal device 1300 further includes a communication interface for receiving and sending data.

In some possible implementations, the terminal device 1300 may be the first terminal device mentioned above.

In some possible implementations, the processor 1310 may be one or more CPUs. When the processor 1310 is a CPU, the CPU may be a single-core CPU or a multi-core CPU.

In some possible implementations, the processor 1310 may be a baseband chip, a chip, a CPU, a general-purpose processor, a DSP, an ASIC, an FPGA or other programmable logic device, a transistor logic device, a hardware component or any combination thereof.

In specific implementation, the processor 1310 in the terminal device 1300 is used to execute the computer program or instruction 1321 stored in the memory 1320 to perform the following operations:

performing physical random access channel (PRACH) transmission on a first valid physical random access channel occasion (RO) obtained according to sub-band full duplex (SBFD) configuration.

It can be seen that as PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

It is to be noted that the specific implementation of each operation can refer to the corresponding description of the above method embodiment, and the terminal device 1300 can be used to execute the above method embodiment of the present application, which will not be repeated here.

Seventh, example of a network device.

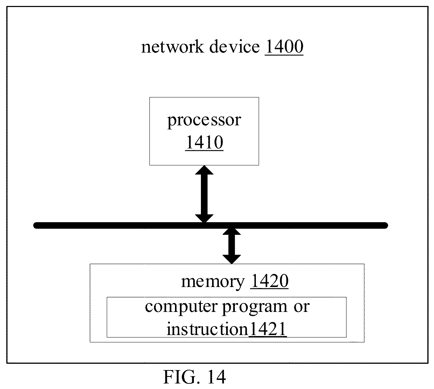

Referring to FIG. 14, FIG. 14 is a schematic diagram of a network device according to an embodiment of the present application. The network device 1400 includes a processor 1410, a memory 1420, and a communication bus for coupling the processor 1410 to the memory 1420.

In some possible implementations, the memory 1420 includes but is not limited to RAM, ROM, EPROM or CD-ROM. The memory 1420 is used to store relevant instructions and data.

In some possible implementations, the network device 1400 further includes a communication interface for receiving and sending data.

In some possible implementations, the processor 1410 may be one or more CPUs. When the processor 1410 is a CPU, the CPU may be a single-core CPU or a multi-core CPU.

In some possible implementations, the processor 1410 may be a baseband chip, a chip, a CPU, a general-purpose processor, a DSP, an ASIC, an FPGA or other programmable logic device, a transistor logic device, a hardware component or any combination thereof.

In some possible implementations, the processor 1410 in the network device 1400 is used to execute the computer program or instruction 1421 stored in the memory 1420 to perform the following operations:

performing physical random access channel (PRACH) transmission on a first valid physical random access channel occasion (RO) obtained according to sub-band full duplex (SBFD) configuration.

It can be seen that as PRACH transmission involves using ROs to transmit RA preamble/random access request message, and traditional ROs are generally obtained through non-SBFD configuration, the present application enables the network to configure SBFD and obtain ROs resulting from the SBFD configuration. Then PRACH transmission is performed on the first valid RO, so that SBFD is integrated with PRACH transmission, thereby achieving enhanced PRACH transmission.

It is to be noted that the specific implementation of each operation can refer to the corresponding description of the above method embodiment, and the network device 1400 can be used to execute the above method embodiment of the present application, which will not be repeated here.

Eighth, other related examples.

In some possible implementations, the above method embodiments may be applied to or in a terminal device. That is, an execution entity of the above method embodiments may be a terminal device, a chip, a chip module or a module, etc., which are not specifically limited thereto.

In some possible implementations, the above method embodiments may be applied to or in network devices. That is, an execution entity of the above method embodiments may be a network device, a chip, a chip module or a module, etc., which are not specifically limited thereto.

One embodiment of the present application further provides a chip, including a processor, a memory, and a computer program or instructions stored in the memory. The processor executes the computer program or instructions to implement the steps described in the above method embodiment.

One embodiment of the present application further provides a chip module, including a transceiver component and a chip. The chip includes a processor, a memory and a computer program or instructions stored in the memory. The processor executes the computer program or instructions to implement the steps described in the above method embodiment.

One embodiment of the present application further provides a computer-readable storage medium storing a computer program or instructions. The computer program or instructions, when executed, implements the steps described in the above method embodiment.

One embodiment of the present application further provides a computer program product, including a computer program or instructions. The computer program or instructions, when executed, implements the steps described in the above method embodiment.

One embodiment of the present application further provides a communication system, including the above terminal device and the above network device.

It is to be noted that, for the above various embodiments, for simplicity of description, they are all expressed as a series of action combinations. Those skilled in the art should be aware that the present application is not limited by the described order of actions, because some steps in the embodiments of the present application can be performed in other orders or simultaneously. In addition, those skilled in the art should also be aware that the embodiments described in the specification are all preferred embodiments, and the actions, steps, modules or units involved are not necessarily required for the embodiments of the present application.

In the above embodiments, the embodiments of the present application have different focuses on the description of each embodiment. For parts that are not described in detail in a certain embodiment, reference can be made to the relevant descriptions in other embodiments.

The steps of the method or algorithm described in the embodiments of the present application can be implemented in hardware or by executing software instructions by a processor. The software instructions can be composed of corresponding software modules, and the software modules can be stored in RAM, flash memory, ROM, EPROM, electrically erasable programmable read-only memory (EEPROM), registers, hard disks, mobile hard disks, read-only compact disks (CD-ROMs) or any other form of storage medium known in the art. An exemplary storage medium is coupled to the processor, so that the processor can read information from the storage medium and write information to the storage medium. Of course, the storage medium can also be a component of the processor. The processor and the storage medium can be in an ASIC. In addition, the ASIC can be in a terminal device or a management device. Of course, the processor and storage medium may also exist as discrete components in a terminal device or management device.

Those skilled in the art should be aware that in one or more of the above examples, the functions described in the embodiments of the present application can be implemented in whole or in part by software, hardware, firmware, or any combination thereof. When implemented by using software, it can be implemented in whole or in part in the form of a computer program product. The computer program product includes one or more computer instructions. When the computer program instructions are loaded and executed on a computer, the process or function described in the embodiments of the present application is generated in whole or in part. The computer can be a general-purpose computer, a special-purpose computer, a computer network, or other programmable device. The computer instructions can be stored in a computer-readable storage medium or transmitted from one computer-readable storage medium to another computer-readable storage medium. For example, the computer instructions can be transmitted from a website site, computer, server, or data center to another website site, computer, server, or data center by wired (e.g., coaxial cable, optical fiber, digital subscriber line (DSL)) or wireless (e.g., infrared, radio, microwave, etc.) mode. The computer-readable storage medium can be any available medium that a computer can access or a data storage device such as a server or data center that includes one or more available media integrations. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The modules/units included in the devices and products described in the above embodiments may be software modules/units or hardware modules/units, or may be partially software modules/units and partially hardware modules/units. For example, for the devices and products applied to or integrated in the chip, the modules/units included therein may all be implemented in the form of hardware such as circuits, or at least some of the modules/units may be implemented in the form of software programs, which run on the processor integrated inside the chip, and the remaining (if any) modules/units may be implemented in the form of hardware such as circuits. For the devices and products applied to or integrated in the chip module, the modules/units included therein may all be implemented in the form of hardware such as circuits, and different modules/units may be located in the same component (such as a chip, circuit module, etc.) or in different components of the chip module, or at least some of the modules/units may be implemented in the form of software programs, which run on the processor integrated inside the chip, and the remaining (if any) modules/units may be implemented in the form of hardware such as circuits. For the devices or products applied to or integrated into the terminal device, the modules/units included therein may all be implemented in the form of hardware such as circuits, and different modules/units may be located in the same component (such as a chip, circuit module, etc.) or in different components of the terminal device, or at least some of the modules/units may be implemented in the form of software programs, which run on the processor integrated inside the terminal device, and the remaining (if any) modules/units may be implemented in the form of hardware such as circuits.

The above specific implementations provide a further detailed explanation of the purpose, technical solutions and beneficial effects of the embodiments of the present application. It is to be understood that the foregoing descriptions are merely specific implementations of the embodiments of the present application and are not intended to limit the protection scope of the embodiments of the present application. Any modifications, equivalent replacements, improvements, etc., made based on the technical solutions of the embodiments of the present application shall be included within the protection scope of the embodiments of the present application.

### Claims

1.    A physical random access channel transmission method, comprising:
performing physical random access channel (PRACH) transmission on a first valid physical random access channel occasion (RO) obtained according to sub-band full duplex (SBFD) configuration.

2.    The method according to claim 1, wherein the first valid RO is in an uplink subband of an SBFD symbol.

3.    The method according to claim 1 or 2, wherein the first valid RO starts at least a preset number of symbols after switching from a non-SBFD downlink symbol to an SBFD symbol.

4.    The method according to claim 2, wherein the first valid RO in the uplink subband of the SBFD symbol comprises:
all resource blocks (RB) of the first valid RO are in the uplink subband of the SBFD symbol.

5.    The method according to claim 2, wherein the first valid RO in the uplink subband of the SBFD symbol comprises:
a portion of resource blocks (RBs) of the first valid RO are in an uplink subband of an SBFD flexible symbol, and a remaining portion of the RBs of the first valid RO are in a downlink subband of the SBFD flexible symbol.

6.    The method according to claim 1, wherein the first valid RO is in at least a preset number of symbols after switching from an SBFD symbol to a non-SBFD flexible symbol; and/or,
the first valid RO has a same frequency domain position as an uplink subband of an SBFD symbol.

7.    The method according to claim 1, wherein the first valid RO includes all frequency domain ROs at a same time domain position, and all the frequency domain ROs are in an uplink subband of an SBFD symbol.

8.    The method according to claim 1, wherein the first valid RO includes partial frequency domain ROs that are only in an uplink subband of an SBFD symbol, among all frequency domain ROs at a same time domain position.

9.    The method according to claim 1, wherein some symbols of the first valid RO are in an uplink subband of SBFD symbols, and remaining symbols of the first valid RO are in non-SBFD uplink symbols or non-SBFD flexible symbols.

10.    The method according to claim 1, wherein mapping between ROs and synchronization signal blocks (SSBs) is jointly and uniformly applied for the first valid RO and a second valid RO.

11.    The method according to claim 1, wherein mapping between ROs and synchronization signal blocks (SSBs) is applied separately for the first valid RO and a second valid RO.

12. The method according to claim 1, wherein the first valid RO and a second valid RO are configured by using a single random access channel configuration.

13. The method according to claim 1, wherein the first valid RO and a second valid RO are configured by using different random access channel configurations.

14. The method according to claim 1, wherein if an SBFD flexible symbol where the first valid RO is located comes from a non-SBFD flexible symbol, an RO obtained according to the SBFD configuration and an RO obtained according to a non-SBFD configuration are configured by using a single random access channel configuration or different random access channel configurations.

15. The method according to any one of claims 10 to 14, wherein the second valid RO is in a PRACH slot and is in a non-SBFD uplink symbol or a non-SBFD flexible symbol; and the second valid RO starts at least a preset number of symbols after a last non-SBFD downlink symbol, and/or starts at least the preset number of symbols after an SSB symbol; or,
the second valid RO is in a PRACH slot and is in an uplink symbol or a flexible symbol, and starts at least a preset number of symbols after a last downlink symbol, and/or starts at least the preset number of symbols after an SSB symbol.

16. A physical random access channel transmission device, comprising:
a transmission unit used to perform physical random access channel (PRACH) transmission on a first valid physical random access channel occasion (RO) obtained according to sub-band full duplex (SBFD) configuration.

17. The device according to claim 16, wherein the first valid RO is in an uplink subband of an SBFD symbol.

18. The device according to claim 16 or 17, wherein the first valid RO starts at least a preset number of symbols after switching from a non-SBFD downlink symbol to an SBFD symbol.

19. The device according to claim 17, wherein the first valid RO in the uplink subband of the SBFD symbol comprises:
all resource blocks (RB) of the first valid RO are in the uplink subband of the SBFD symbol.

20. The device according to claim 17, wherein the first valid RO in the uplink subband of the SBFD symbol comprises:
a portion of resource blocks (RBs) of the first valid RO are in an uplink subband of an SBFD flexible symbol, and a remaining portion of the RBs of the first valid RO are in a downlink subband of the SBFD flexible symbol.

21. The device according to claim 16, wherein the first valid RO is in at least a preset number of symbols after switching from an SBFD symbol to a non-SBFD flexible symbol; and/or,
the first valid RO has a same frequency domain position as an uplink subband of an SBFD symbol.

22. The device according to claim 16, wherein the first valid RO includes all frequency domain ROs at a same time domain position, and all the frequency domain ROs are in an uplink subband of an SBFD symbol.

23. The device according to claim 16, wherein the first valid RO includes partial frequency domain ROs that are only in an uplink subband of an SBFD symbol, among all frequency domain ROs at a same time domain position.

24. The device according to claim 16, wherein some symbols of the first valid RO are in an uplink subband of SBFD symbols, and remaining symbols of the first valid RO are in non-SBFD uplink symbols or non-SBFD flexible symbols.

25. The device according to claim 16, wherein mapping between ROs and synchronization signal blocks (SSBs) is jointly and uniformly applied for the first valid RO and a second valid RO.

26. The device according to claim 16, wherein mapping between ROs and synchronization signal blocks (SSBs) is applied separately for the first valid RO and a second valid RO.

27. The device according to claim 16, wherein the first valid RO and a second valid RO are configured by using a single random access channel configuration.

28. The device according to claim 16, wherein the first valid RO and a second valid RO are configured by using different random access channel configurations.

29. The device according to claim 16, wherein if an SBFD flexible symbol where the first valid RO is located comes from a non-SBFD flexible symbol, an RO obtained according to the SBFD configuration and an RO obtained according to a non-SBFD configuration are configured by using a single random access channel configuration or different random access channel configurations.

30. The device according to any one of claims 25 to 29, wherein the second valid RO is in a PRACH slot and is in a non-SBFD uplink symbol or a non-SBFD flexible symbol; and the second valid RO starts at least a preset number of symbols after a last non-SBFD downlink symbol, and/or starts at least the preset number of symbols after an SSB symbol; or,
the second valid RO is in a PRACH slot and is in an uplink symbol or a flexible symbol, and starts at least a preset number of symbols after a last downlink symbol, and/or starts at least the preset number of symbols after an SSB symbol.

31. A terminal device, comprising: a processor, a memory and a computer program or instruction stored in the memory; wherein the processor executes the computer program or instruction to implement the steps of the method according to any one of claims 1 to 15.

32. A network device, comprising: a processor, a memory and a computer program or instruction stored in the memory; wherein the processor executes the computer program or instruction to implement the steps of the method according to any one of claims 1 to 15.

33. A chip, comprising: a processor and a communication interface; wherein the processor implements the steps of the method according to any one of claims 1 to 15.

34. A computer-readable storage medium, comprising a computer program or instruction stored thereon; wherein the computer program or instruction, when executed, implements the steps of the method according to any one of claims 1 to 15.

FIG. 1

FIG. 2

frequency

| SSB 3 | SSB 7 | SSB 3 | SSB 7 | SSB 3 | SSB 7 | SSB 3 | SSB 7 |
| SSB 2 | SSB 6 | SSB 2 | SSB 6 | SSB 2 | SSB 6 | SSB 2 | SSB 6 |
| SSB 1 | SSB 5 | SSB 1 | SSB 5 | SSB 1 | SSB 5 | SSB 1 | SSB 5 |
| SSB 0 | SSB 4 | SSB 0 | SSB 4 | SSB 0 | SSB 4 | SSB 0 | SSB 4 |

åå

time

legend

| SSB i | : RO corresponding to SSBi, i ∈ {0,1,2,3,4,5,6,7} |

**FIG. 3**

frequency

| SSB 6/7 | SSB 6/7 | SSB 6/7 | SSB 6/7 | SSB 6/7 | SSB 6/7 | SSB 6/7 | SSB 6/7 |
| SSB 4/5 | SSB 4/5 | SSB 4/5 | SSB 4/5 | SSB 4/5 | SSB 4/5 | SSB 4/5 | SSB 4/5 |
| SSB 2/3 | SSB 2/3 | SSB 2/3 | SSB 2/3 | SSB 2/3 | SSB 2/3 | SSB 2/3 | SSB 2/3 |
| SSB 0/1 | SSB 0/1 | SSB 0/1 | SSB 0/1 | SSB 0/1 | SSB 0/1 | SSB 0/1 | SSB 0/1 |

åå

time

legend

| SSB 0/1 | :RO corresponding to SSB0 and SSB | SSB 4/5 | : RO corresponding to SSB4 and SSB5 |
| SSB 2/3 | : RO corresponding to SSB2 and SSB3 | SSB 6/7 | :RO corresponding to SSB6 and SSB7 |

**FIG. 4**

one or more frequency domain positions

| Downlink | Downlink | Flexible | Flexible | Uplink |
|----------|----------|----------|----------|--------|
| slot n | slot n+1 | slot n+2 | slot n+3 | slot n+4 |

FIG. 5

frequency domain positions

| Downlink | Downlink | Downlink | Downlink | Uplink |
| | Uplink | Uplink | Uplink | |
| | Downlink | Downlink | Downlink | |
| slot n | slot n+1 | slot n+2 | slot n+3 | slot n+4 |

FIG. 6

☐ :downlink symbol       ▨ flexible symbol

$N_{gap}$ symbols     second valid RO

FIG. 7

□ :downlink
subband

▨ :uplink
subband

Slot *n*    Slot *n*+1

frequency

time

multiple non-SBFD downlink symbols

multiple SBFD downlink symbols

(a)

□ :downlink
subband

▨ :uplink
subband

Slot *n*+1
first valid RO

Slot *n*

frequency

time

multiple non-SBFD downlink symbols

$N_{gap}$ symbols

multiple SBFD downlink symbols

(b)

FIG. 8

(a)

(b)

FIG. 9

FIG. 10

performing physical random access channel (PRACH) transmission on a first valid physical random access channel occasion (RO) obtained according to sub-band full duplex (SBFD) configuration — S1101

FIG. 11

1200

physical random access
channel transmission device

transmission unit — 1201

FIG. 12

terminal device 1300

processor
1310

memory 1320

computer program or
instruction 1321

FIG. 13

network device <u>1400</u>

processor
<u>1410</u>

memory <u>1420</u>

computer program or
instruction<u>1421</u>

FIG. 14

## INTERNATIONAL SEARCH REPORT

| | International application No. |
|---|---|
| | **PCT/CN2024/104274** |

### A. CLASSIFICATION OF SUBJECT MATTER

H04W74/08(2024.01)i

According to International Patent Classification (IPC) or to both national classification and IPC

### B. FIELDS SEARCHED

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, ENTXT, WPABSC, DWPI: 子带, 双工, 随机接入, 机会, 信道, SBFD, RO, PARCH, 上行, 频域, 有效; occasion, valid, random access, frequency domain, channel, uplink, subband, full duplex

### C. DOCUMENTS CONSIDERED TO BE RELEVANT

| Category* | Citation of document, with indication, where appropriate, of the relevant passages | Relevant to claim No. |
|---|---|---|
| A | CN 113543360 A (BEIJING SAMSUNG TELECOM R&D CENTER et al.) 22 October 2021 (2021-10-22)<br>description, paragraphs 80-100, and figure 4 | 1-34 |
| A | CN 115696606 A (VIVO COMMUNICATION TECHNOLOGY CO., LTD.) 03 February 2023 (2023-02-03)<br>entire document | 1-34 |
| A | CN 115767737 A (APPLE INC.) 07 March 2023 (2023-03-07)<br>entire document | 1-34 |
| A | CN 115884162 A (BEIJING UNISOC COMMUNICATION TECHNOLOGY CO., LTD.) 31 March 2023 (2023-03-31)<br>entire document | 1-34 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2024** | **09 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/104274**

| Patent document cited in search report | | | Publication date (day/month/year) | Patent family member(s) | | | Publication date (day/month/year) |
|---|---|---|---|---|---|---|---|
| CN | 113543360 | A | 22 October 2021 | None | | | |
| CN | 115696606 | A | 03 February 2023 | None | | | |
| CN | 115767737 | A | 07 March 2023 | KR | 20230033629 | A | 08 March 2023 |
| | | | | US | 2023071357 | A1 | 09 March 2023 |
| | | | | EP | 4145758 | A1 | 08 March 2023 |
| | | | | US | 2023092041 | A1 | 23 March 2023 |
| | | | | KR | 20230033630 | A | 08 March 2023 |
| | | | | EP | 4145749 | A1 | 08 March 2023 |
| | | | | US | 2023073130 | A1 | 09 March 2023 |
| | | | | KR | 20230033631 | A | 08 March 2023 |
| | | | | EP | 4145944 | A1 | 08 March 2023 |
| CN | 115884162 | A | 31 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310864694